# EUROPEAN PATENT APPLICATION

(11) **EP 4 456 504 A1**
(43) Date of publication of application: **30.10.2024**
(21) Application number: 23742729.9
(22) Date of filing: 06.01.2023
(51) Int. Cl.: H04L 45/24

(54) **MULTI-LINK COMMUNICATION METHOD AND APPARATUS**

(30) Priority: 23.01.2022 CN 202210076088; 28.01.2022 CN 202210109328
(71) Applicant: Huawei Technologies Co., Ltd., Shenzhen, Guangdong 518129 (CN)
(72) Inventor: LI, Yunbo, Shenzhen, Guangdong 518129 (CN); LI, Yiqing, Shenzhen, Guangdong 518129 (CN); GAN, Ming, Shenzhen, Guangdong 518129 (CN); GUO, Yuchen, Shenzhen, Guangdong 518129 (CN)
(74) Representative: Körber, Martin Hans
(86) International application number: PCT/CN2023/071022
(87) International publication number: WO 2023/138414

(57) **Abstract**

This application discloses a multi-link communication method and apparatus. The method includes: A transmitter sends a first A-MPDU, and a receiver receives the first A-MPDU. The receiver obtains a locally recorded scoreboard context, and when the first A-MPDU meets at least one of the following conditions: a first condition, a second condition, a third condition, or a fourth condition, the receiver refreshes the scoreboard context based on an SN of the first A-MPDU. According to the method provided in this application, the receiver can properly and effectively refresh the local scoreboard context, to ensure that the receiver correctly feeds back receiving statuses of all MPDUs in an A-MPDU received by the receiver.

## Description

This application claims priorities to Chinese Patent Application No. 202210076088.X, filed with the China National Intellectual Property Administration filed on January 23, 2022 and entitled "MULTI-LINK COMMUNICATION METHOD AND APPARATUS", and to Chinese Patent Application No. 202210109328.1, filed with the China National Intellectual Property Administration on January 28, 2022 and entitled "MULTI-LINK COMMUNICATION METHOD AND APPARATUS", both of which are incorporated herein by reference in their entireties.

### TECHNICAL FIELD

This application relates to the field of communication technologies, and in particular, to a multi-link communication method and apparatus.

### BACKGROUND

A next-generation wireless local area network (wireless local area network, WLAN) standard develops and evolves towards continuous improvement of throughput. WLAN system standards are mainly studied and discussed in the institute of electrical and electronics engineers (institute of electrical and electronics engineers, IEEE) 802.11 standard group. For example, a key technology in which an extremely high throughput (extremely high throughput, EHT) is used as a target may include multi-link (multi-link, ML) communication. Based on the multi-link communication, a multi-link device may perform communication on 2.4 GHz, 5 GHz, and 6 GHz frequency bands, to select an optimal frequency band to ensure communication quality of the multi-link device.

In a multi-link communication scenario, an access point multi-link device may send data packets corresponding to a same traffic identifier to a station multi-link device through a plurality of links. In addition, when the station multi-link device maintains a local scoreboard on each link, stations on different links may fail to correctly feed back, in an existing block acknowledgment mechanism, receiving statuses of all MPDUs in received aggregate media access control protocol data units (aggregate media access control protocol data unit, A-MPDU).

Therefore, in the multi-link communication scenario, how to ensure that receiving devices on different links correctly feed back the receiving statuses of all the MPDUs in the received A-MPDUs needs to be urgently resolved.

### SUMMARY

This application provides a multi-link communication method and apparatus, to effectively ensure that a receiver correctly feeds back receiving statuses of all MPDUs in an A-MPDU received by the receiver.

According to a first aspect, an embodiment of this application provides a multi-link communication method. The method includes: A receiver receives a first aggregate media access control protocol data unit A-MPDU. The receiver obtains a locally recorded scoreboard context, and when the first A-MPDU meets any one or more of the following conditions, refreshes the scoreboard context based on a sequence number SN of the first A-MPDU. A first condition includes: a STA affiliated with the receiver receives an MPDU with an SN that WinStart_{R}≤SN<WinStart_{R}+2¹¹; a second condition includes: none of MPDUs with SNs that satisfy WinStart_{B}-WinSize_{R}≤SN<WinStart_{B} is received by the STA, or all MPDUs with SNs that satisfy WinStart_{B}-WinSize_{R}≤SN<WinStart_{B} are received by another STA affiliated with the receiver; and a third condition includes: no any frame in another A-MPDU received before the first A-MPDU is not responded by a BA, any MPDU in any A-MPDU received before the first A-MPDU responds by a BA, or all MPDUs carried in any A-MPDU received before the first A-MPDU respond by a BA.

In a possible implementation, the first A-MPDU further meets a following fourth condition. The fourth condition includes: no other MPDU with an SN in the first A-MPDU already meets the first condition, the second condition, and the third condition, an MPDU with an SN received by a STA affiliated with the receiver is a 1^{st} MPDU that is in the first A-MPDU and that meets the first condition, the second condition, and the condition, or a scoreboard context of a STA affiliated with the receiver has not been refreshed based on an MPDU in the first A-MPDU.

In a possible implementation, the receiver has separate scoreboard context control in each link, and the link is a link between the receiver and a transmitter.

In a possible implementation, the STA affiliated with the receiver is capable of using reordering buffer information to update the scoreboard context.

In a possible implementation, SNs in the first A-MPDU belong to a same traffic identifier TID.

According to the method provided in this embodiment of this application, the receiver can properly and effectively refresh the local scoreboard (local scoreboard) context.

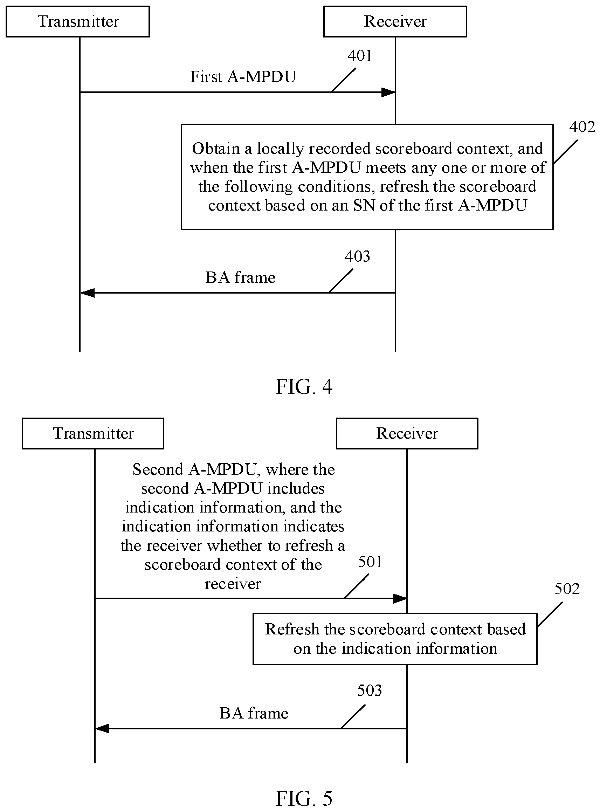

It may be understood that for specific description of any one of the first aspect or the possible implementations, refer to the following description of a third scoreboard context control operation to a tenth scoreboard context control operation, the method shown in FIG. 4 below, and the like. Details are not described one by one herein again.

According to a second aspect, an embodiment of this application provides a multi-link communication method. The method includes: A transmitter sends a second A-MPDU. The A-MPDU includes indication information, and the indication information indicates a receiver whether to refresh a scoreboard context of the receiver.

In a possible implementation, the indication information indicates whether a STA corresponding to a link used to transmit the second A-MPDU refreshes a scoreboard context of the STA.

In a possible implementation, the indication information is carried in an MPDU delimiter or a high throughput control field.

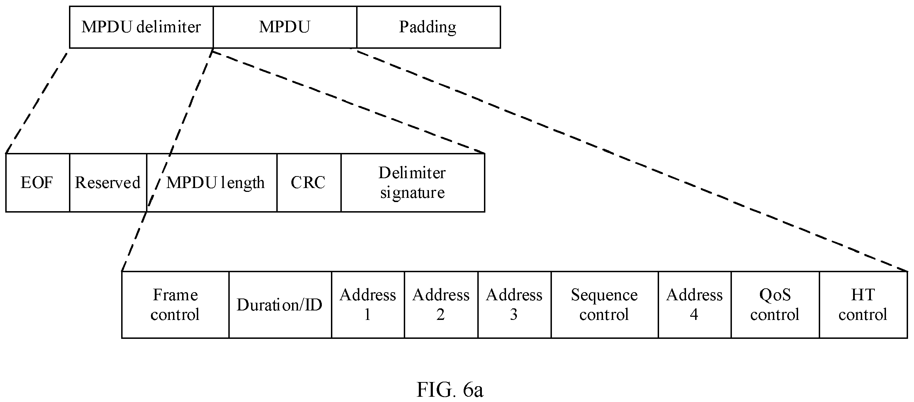

It may be understood that for specific description of any one of the second aspect or the possible implementations, refer to the method shown in FIG. 5 and descriptions shown in FIG. 6a to FIG. 6d below. Details are not described one by one herein again.

According to a third aspect, an embodiment of this application provides a communication apparatus, configured to perform the method according to any one of the first aspect or the possible implementations of the first aspect. The communication apparatus includes a unit that performs the method according to any one of the first aspect or the possible implementations of the first aspect.

For example, the communication apparatus may be a transmitter, a chip in a transmitter, or the like.

According to a fourth aspect, an embodiment of this application provides a communication apparatus, configured to perform the method according to any one of the second aspect or the possible implementations of the second aspect. The communication apparatus includes a unit that performs the method according to any one of the second aspect or the possible implementations of the second aspect.

For example, the communication apparatus may be a receiver, a chip in a receiver, or the like.

In the third aspect or the fourth aspect, the communication apparatus may include a transceiver unit and a processing unit. For specific descriptions of the transceiver unit and the processing unit, refer to apparatus embodiments shown below.

According to a fifth aspect, an embodiment of this application provides a communication apparatus. The communication apparatus includes a processor, configured to perform the method shown in any one of the first aspect or the possible implementations of the first aspect. Alternatively, the processor is configured to execute a program stored in a memory. When the program is executed, the method shown in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may be further integrated into one component, in other words, the processor and the memory may be further integrated together.

In a possible implementation, the communication apparatus further includes a transceiver, and the transceiver is configured to receive a signal or send a signal. For example, the transceiver may be further configured to receive an A-MPDU or the like.

In this embodiment of this application, the communication apparatus may be a transmitter, a chip in a transmitter, or the like.

According to a sixth aspect, an embodiment of this application provides a communication apparatus. The communication apparatus includes a processor, configured to perform the method shown in any one of the second aspect or the possible implementations of the second aspect. Alternatively, the processor is configured to execute a program stored in a memory. When the program is executed, the method shown in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may be further integrated into one component, in other words, the processor and the memory may be further integrated together.

In a possible implementation, the communication apparatus further includes a transceiver, and the transceiver is configured to receive a signal or send a signal. For example, the transceiver may be configured to send an A-MPDU.

In this embodiment of this application, the communication apparatus may be a receiver, a chip in a receiver, or the like.

According to a seventh aspect, an embodiment of this application provides a communication apparatus. The communication apparatus includes a logic circuit and an interface, and the logic circuit is coupled to the interface. The interface is configured to input a first A-MPDU, and the logic circuit is configured to refresh a local scoreboard context based on the first A-MPDU.

Optionally, the interface is further configured to output a BA frame.

Optionally, the communication apparatus further includes a memory. The memory is configured to store any one or more of a third scoreboard context control operation to a tenth scoreboard context control operation.

According to an eighth aspect, an embodiment of this application provides a communication apparatus. The communication apparatus includes a logic circuit and an interface, and the logic circuit is coupled to the interface. The logic circuit is configured to generate a first A-MPDU, and the interface is configured to output the first A-MPDU.

In some other embodiments of this application, the interface is configured to output a second A-MPDU, and the second A-MPDU includes indication information.

According to a ninth aspect, an embodiment of this application provides a computer-readable storage medium. The computer-readable storage medium is configured to store a computer program. When the computer program runs on a computer, the method shown in any one of the first aspect or the possible implementations of the first aspect is enabled to be performed.

According to a tenth aspect, an embodiment of this application provides a computer-readable storage medium. The computer-readable storage medium is configured to store a computer program. When the computer program runs on a computer, the method shown in any one of the second aspect or the possible implementations of the second aspect is enabled to be performed.

According to an eleventh aspect, an embodiment of this application provides a computer program product. The computer program product includes a computer program or computer code. When the computer program product is run on a computer, the method shown in any one of the first aspect or the possible implementations of the first aspect is enabled to be performed.

According to a twelfth aspect, an embodiment of this application provides a computer program product. The computer program product includes a computer program or computer code. When the computer program product is run on a computer, the method shown in any one of the second aspect or the possible implementations of the second aspect is enabled to be performed.

According to a thirteenth aspect, an embodiment of this application provides a computer program. When the computer program runs on a computer, the method shown in any one of the first aspect or the possible implementations of the first aspect is performed.

According to a fourteenth aspect, an embodiment of this application provides a computer program. When the computer program runs on a computer, the method shown in any one of the second aspect or the possible implementations of the second aspect is performed.

According to a fifteenth aspect, an embodiment of this application provides a wireless communication system. The wireless communication system includes a transmitter and a receiver. The transmitter is configured to perform the method shown in any one of the first aspect or the possible implementations of the first aspect. The receiver is configured to perform the method shown in any one of the second aspect or the possible implementations of the second aspect.

WinStart_{R}≤SN<WinStart_{R}+2¹¹ in the first aspect to the fifteenth aspect is shown by using WinSize_{R}=1024 as an example. However, WinSize_{R} in this application may alternatively be 64, 128, 256, or 512. Therefore, WinStart_{R}≤SN<WinStart_{R}+2¹¹ in the first aspect to the fifteenth aspect may alternatively be understood as WinStart_{R}≤SN<WinStart_{R}+2*WinSize_{R}. This is not listed one by one herein.

### BRIEF DESCRIPTION OF DRAWINGS

FIG. 1a to FIG. 1c are schematic diagrams of multi-link communication scenarios according to embodiments of this application;
FIG. 2 is a schematic flowchart of a multi-link communication method according to an embodiment of this application;
FIG. 3a to FIG. 3f are schematic diagrams of scoreboard context control operations according to embodiments of this application;
FIG. 4 is a schematic flowchart of a multi-link communication method according to an embodiment of this application;
FIG. 5 is a schematic flowchart of another multi-link communication method according to an embodiment of this application;
FIG. 6a is a schematic diagram of a structure of an MPDU subframe according to an embodiment of this application;
FIG. 6b is a schematic diagram of a format of an aggregation control field according to an embodiment of this application;
FIG. 6c is a schematic diagram of a format of an aggregation control field according to an embodiment of this application;
FIG. 6d is a schematic diagram of a frame structure of command and status type control information according to an embodiment of this application;
FIG. 7 to FIG. 9 are schematic diagrams of structures of communication apparatuses according to embodiments of this application; and
FIG. 10a and FIG. 10b are schematic diagrams of scoreboard context control operations according to embodiments of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are merely intended to distinguish between different objects but do not indicate a particular order. In addition, the terms "including", "having", and any other variant thereof are intended to cover non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

"Embodiment" mentioned in this specification means that a particular characteristic, structure, or feature described with reference to embodiments may be included in at least one embodiment of this application. The term appear at various locations in this specification may neither necessarily mean a same embodiment, nor mean an independent or optional embodiment exclusive from another embodiment. A person skilled in the art may understand, in explicit and implicit manners, that an embodiment described in this application may be combined with another embodiment.

In this application, "at least one (item)" means one or more, "a plurality of" means two or more, and "at least two (items)" means two or more than three (including three). The term "and/or" is used to describe an association relationship for describing associated objects and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items. For example, at least one (piece) of a, b, or c may represent: a, b, c, "a and b", "a and c", "b and c", or "a, b, and c".

A multi-link communication method provided in this application may be applied to a wireless communication system. The wireless communication system may include a WLAN, a cellular network, or the like. The method may be implemented by a communication device in the wireless communication system, a logic circuit or a processor in a communication device, or the like. The communication device may be a wireless communication device, for example, referred to as a multi-link device (multi-link device, MLD) or a multi-band device (multi-band device), that supports parallel transmission on a plurality of links. For example, in the wireless local area network, the communication device supports communication by using the IEEE 802.11 series protocols. The IEEE 802.11 series protocols include 802.11be, next-generation 802.11be, 802.11ax, 802.11a/b/g/n/ac, or the like. This is not listed one by one herein.

The following first describes a multi-link device in this application.

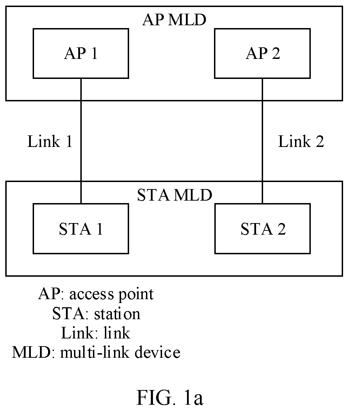

A core idea of multi-link communication is that a WLAN device, for example, an EHT device, that supports the IEEE 802.11 standard is capable of performing sending and/or receiving on a plurality of frequency bands, so that a larger bandwidth can be used for transmission, thereby improving a throughput. For example, the plurality of frequency bands mainly include but are not limited to a 2.4 GHz Wi-Fi frequency band, a 5 GHz Wi-Fi frequency band, or a 6 GHz Wi-Fi frequency band. For example, access and/or transmission on each frequency band is referred to as one link, and therefore access and/or transmission on a plurality of frequency bands is referred to as a plurality of links. For example, a device that supports multi-link communication is referred to as a multi-link device (multi-link device, MLD). FIG. 1a is a schematic diagram of a multi-link communication scenario according to an embodiment of this application. For example, there are a plurality of access points (access point, AP) or stations (station, STA) on an MLD device, to form an AP multi-link device (AP multi-link device, AP MLD) or a non-AP multi-link device (non-AP multi-link device, non-AP MLD). Communication between MLDs is multi-link communication. In FIG. 1a, a link 1 and a link 2 form a multi-link.

The multi-link device includes one or more affiliated stations. The affiliated station is a logical station and may operate on a link, a frequency band, a channel, or the like. The affiliated station may be an access point (access point, AP) or a non-access point station (non-access point station, non-AP STA). Generally, a multi-link device whose affiliated station is the AP may be referred to as an AP multi-link, an AP multi-link device, or an AP MLD. A multi-link device whose affiliated station is the non-AP STA may be referred to as a multi-link STA, a multi-link STA device, or a STA multi-link device (STA multi-link device). Alternatively, a multi-link device whose affiliated station is the non-AP STA is referred to as a multi-link non-AP, a multi-link non-AP device, a non-AP MLD, or the like. In the following, the multi-link device whose affiliated station is the AP is referred to as the AP MLD, and the multi-link device whose affiliated station is the non-AP STA is referred to as the non-AP MLD. There are one or more affiliated APs in the AP MLD, and there are one or more affiliated STAs in the STA MLD.

The multi-link device may implement wireless communication in compliance with the 802.11 series protocols. For example, a multi-link device in compliance with an extremely high throughput (extremely high throughput, EHT) or a multi-link device in compliance with 802.11be or compatible with 802. 11be implements communication with another device.

The multi-link device (which may be the non-AP MLD or the AP MLD) is a communication apparatus with a wireless communication function. The communication apparatus may be a device, or may be a chip, a processing system, or the like installed on the device. The device on which the chip or the processing system is installed may implement methods and functions in embodiments of this application under control of the chip or the processing system. For example, the multi-link device in embodiments of this application has a wireless transceiver function, may support the 802.11 series protocols, and may communicate with the AP multi-link device or the non-AP multi-link device. For example, the non-AP multi-link device is any user communication device that allows a user to communicate with an AP and thus with a WLAN. For example, the non-AP multi-link device may be user equipment that can access a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone; or may be an Internet of things node in the Internet of things, an in-vehicle communication apparatus in the Internet of vehicles, or the like. Alternatively, the non-AP multi-link device may be a chip and a processing system in the foregoing terminals. The AP multi-link device may be an apparatus providing a service for the non-AP multi-link device, and may support the 802.11 series protocols. For example, the AP multi-link device may be a communication entity such as a communication server, a router, a switch, or a network bridge. Alternatively, the AP multi-link device may include various forms of macro base stations, micro base stations, relay stations, or the like. Certainly, the AP multi-link device may further be a chip and a processing system in the various forms of devices. The 802.11 protocol may be a protocol that supports 802.11be or is compatible with 802.11be.

It may be understood that the multi-link device (which may be the non-AP MLD or the AP MLD) may support high-rate and low-latency transmission. With continuous evolution of wireless local area network application scenarios, the multi-link device may be further applied to more scenarios, for example, serving as a sensor node (for example, a smart water meter, a smart electricity meter, or a smart air detection node) in a smart city, a smart device (for example, a smart camera, a projector, a display screen, a television, a stereo, a refrigerator, or a washing machine) in a smart home, a node in Internet of things, an entertainment terminal (for example, AR, VR, or another wearable device), a smart device (for example, a printer or a projector) in smart office, an Internet of vehicles device in Internet of vehicles, or infrastructure (for example, a vending machine, a self-service navigation console, a self-checkout device, or a self-service food machine) in daily life scenarios. A specific form of the multi-link device is not limited in this embodiment of this application. This is merely an example for description herein.

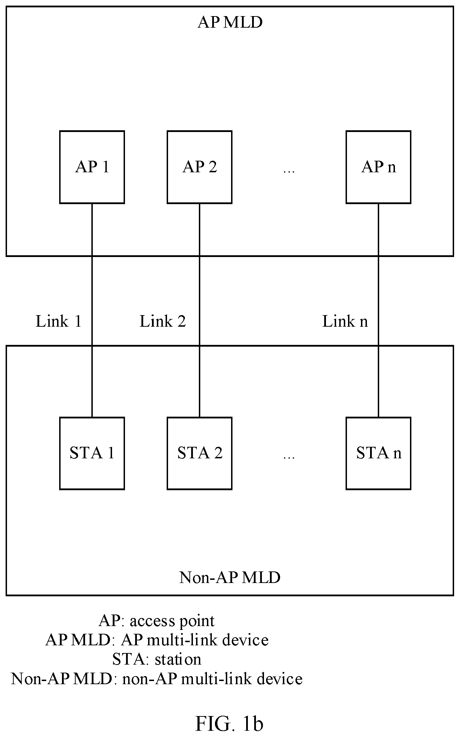

With reference to the multi-link device shown above, FIG. 1b is a schematic diagram of a multi-link communication scenario according to an embodiment of this application. As shown in FIG. 1b, the AP MLD includes an AP 1, an AP 2, ..., and an AP n, and the non-AP MLD includes a STA 1, a STA 2, ..., and a STA n. Here, n is a positive integer. The AP MLD and the non-AP MLD may communicate in parallel through a link 1, a link 2, ..., and a link n. The STA 1 in the non-AP MLD establishes an association relationship with the AP 1 in the AP MLD, the STA 2 in the non-AP MLD establishes an association relationship with the AP 2 in the AP MLD, the STAn in the non-AP MLD establishes an association relationship with the AP n in the AP MLD, and the like. Therefore, after the association relationship is established between one or more STAs in the non-AP MLD and one or more APs in the AP MLD, communication may be performed.

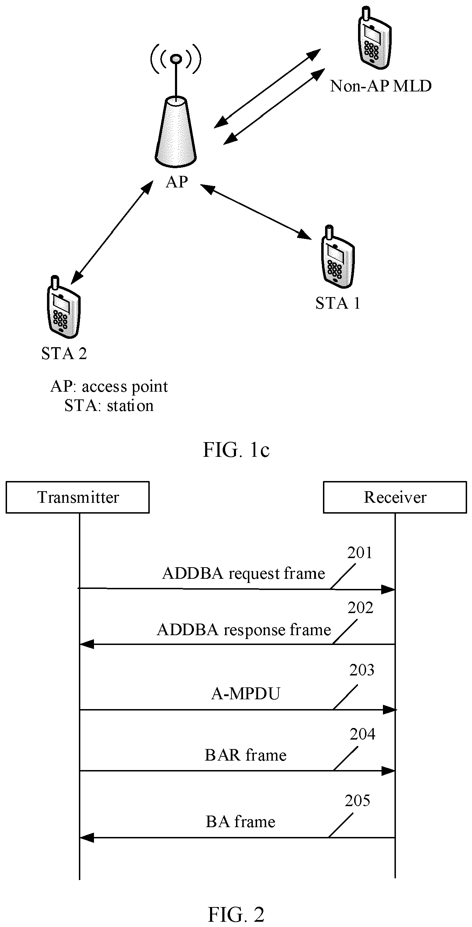

FIG. 1c is a schematic diagram of a multi-link communication scenario according to an embodiment of this application. As shown in FIG. 1c, at least one AP and at least one STA are included. FIG. 1c shows two STAs, for example, a STA 1 and a STA2, and one non-AP MLD. For example, the non-AP MLD may communicate with the AP through two links, and the non-AP MLD includes two affiliated STAs, which are not shown in FIG. 1c. For another example, a STA 2 or a STA 3 may communicate with the AP through one link. To be specific, a system shown in FIG. 1c includes both multi-link communication and single-link communication.

The method provided in this application may be applicable to, but is not limited to, single-user uplink/downlink transmission, multi-user uplink/downlink transmission, vehicle-to-everything (vehicle-to-everything, V2X, where X can represent anything), and device-to-device (device-to-device, D2D). For example, the V2X may include: vehicle-to-vehicle (vehicle-to-vehicle, V2V), vehicle-to-infrastructure (vehicle-to-infrastructure, V2I), vehicle-to-pedestrian (vehicle-to-pedestrian, V2P), vehicle-to-network (vehicle-to-network, V2N), or the like.

A transmitter shown below in this application may be understood as an MLD for sending data by using a block acknowledgment (block acknowledgment, BA) mechanism. The transmitter may also be referred to as an originator MLD (originator MLD), and a party that receives the data is referred to as a receiver. The receiver may also be referred to as a recipient MLD (recipient MLD). For example, the transmitter may be a non-AP MLD, and the receiver may be an AP MLD. For another example, the transmitter may be an AP MLD, and the receiver may be a non-AP MLD. There may be a plurality of links between the transmitter and the receiver. Each link is used for communication between a STA affiliated with the originator MLD (a STA affiliated with the originator MLD) and a STA affiliated with the recipient MLD (a STA affiliated with the recipient MLD).

FIG. 2 is a schematic flowchart of a multi-link communication method according to an embodiment of this application. The multi-link communication method is implemented based on a block acknowledgment (block acknowledgment, BA) mechanism. The BA mechanism may aggregate a plurality of "acknowledgments (acknowledgments)" into one frame, thereby improving channel efficiency. As shown in FIG. 2, the method includes the following steps.

201: A transmitter sends an add block acknowledgment (add BA, ADDBA) request (request) frame to a receiver. Correspondingly, the receiver receives the ADDBA request frame.

202: The receiver sends an ADDBA response (response) frame to the transmitter. Correspondingly, the transmitter receives the ADDBA response frame.

Through the foregoing step 201 and step 202, it may be referred to as successful establishment of a BA protocol, successful establishment of the BA mechanism, or successful establishment of a BA session between the transmitter and the receiver.

203: The transmitter sends an aggregate media access control protocol data unit (aggregate MPDU, A-MPDU) to the receiver. Correspondingly, the receiver receives the A-MPDU.

It may be understood that, based on the BA session established between the transmitter and the receiver, when the transmitter needs to send a plurality of media access control (media access control, MAC) protocol data units (MAC protocol data unit, MPDU) to the receiver, the transmitter may convert the plurality of MPDUs into one A-MPDU through aggregation. In other words, after receiving the A-MPDU, the receiver performs deaggregation control (deaggregation control) on the A-MPDU to obtain the plurality of MPDUs. For example, each MPDU in the A-MPDU has a sequence number (sequence number, SN), and the SN indicates a sequence of each MPDU in the A-MPDU.

For example, a maximum quantity of MPDUs included in one A-MPDU may be 1024. For example, a window size of a scoreboard may be changed, and may be determined through negotiation in interaction between the ADDBA request frame and the ADDBA response frame. For example, the window size of the scoreboard may be 64, 128, 256, 512, 1024, or the like. Data aggregated by one A-MPDU does not exceed the window size of the scoreboard, but may be smaller than the window size of the scoreboard.

204: The transmitter sends a BA request (BA request, BAR) frame to the receiver. Correspondingly, the receiver receives the BAR frame.

It may be understood that step 204 is shown by using an example in which the transmitter sends the BA request frame. Optionally, the transmitter may further set an acknowledgment policy (ACK policy) in the sent A-MPDU to an implicit BAR (implicit BAR). Therefore, the transmitter may not need to separately send the BAR frame.

205: The receiver sends a BA frame to the transmitter based on the BAR frame, where the BA frame is used to acknowledge a receiving status of the MPDU in the A-MPDU. Correspondingly, the transmitter receives the BA frame.

Generally, the receiver needs to maintain a block acknowledgment record (BA record). The BA record includes a bitmap indexed based on sequence numbers, a start sequence number (which may be represented by WinStart_{R}) that is of a 12-bit unsigned integer and that may indicate a lowest sequence number location in the bitmap, a highest sequence number (which may be represented by WinEnd_{R}) in a current transmission window, and a maximum window size (for example, may be represented by WinSize_{R}). For ease of description, the following describes the method provided in embodiments of this application by using an example in which the scoreboard of the receiver includes three parameter definitions: WinStart_{R}, WinSize_{R}, and WinEnd_{R}. WinStart_{R} represents a start sequence number of the scoreboard, WinSize_{R} represents a window size of the scoreboard (for example, may be 1024), and WinEnd_{R} represents an end sequence number of the scoreboard (a current end sequence number of the scoreboard).

For example, after obtaining the plurality of MPDUs based on the A-MPDU, the receiver performs a scoreboard context control (scoreboard context control) operation on each MPDU. After a score is recorded, the received MPDUs are delivered to a receive reordering buffer (receive reordering buffer), the MPDUs are sorted based on a sequence of SNs, and the correctly received MPDUs are delivered to an upper layer. If an MPDU that is not successfully received appears in the reordering process, an SN corresponding to the MPDU is marked as WinStart_{B}, and all MPDUs that are successfully received in sequence and that are before the MPDU corresponding to the SN are delivered to the upper layer. For MPDUs after the SN, the receiver can deliver the correctly received MPDUs after the SN and the MPDU to the upper layer only after receiving the MPDU corresponding to the SN.

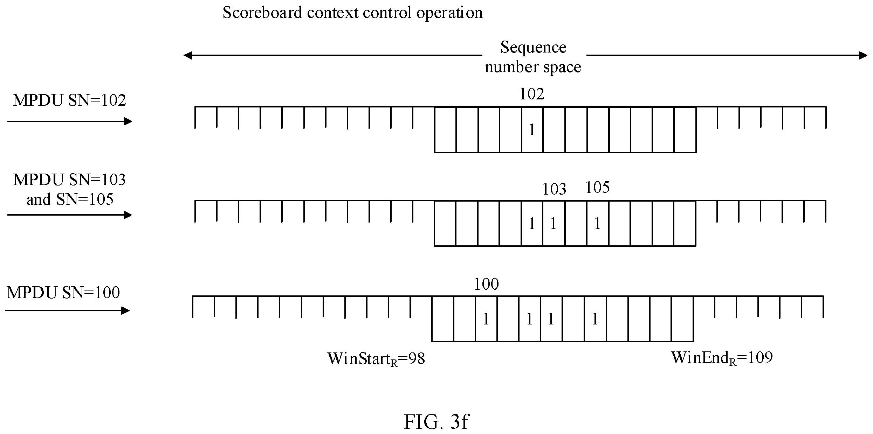

FIG. 3f is a schematic diagram of a scoreboard context control operation according to an embodiment of this application. For example, as shown in FIG. 3f, after deaggregating one A-MPDU, a receiver obtains four MPDUs with SNs: 102, 103, 105, and 100. In this case, the receiver may record, in a scoreboard context, 1 at a bit location corresponding to the SN, where "1" indicates that the MPDU corresponding to the SN is correctly received, a bitmap (bitmap) is formed based on the scoring result, and the bitmap is placed in a BA frame as a corresponding acknowledgment of the A-MPDU. In FIG. 3f, WinStart_{R}=98, WinSize_{R}=12, and WinEnd_{R}=109.

Sequence number space of a BA record may include 4096 SNs, and a window of a scoreboard may be moved in the sequence number space. As a BA session is established, the scoreboard may be initialized. For example, WinStart_{R} may be set to a start sequence number (start sequence number, SSN) provided by an ADDBA request frame. When an MPDU arrives, if an SN of the MPDU falls within space represented by the scoreboard, the receiver uses the SN to index the scoreboard and records correct reception of the MPDU. If the SN is outside the space represented by the scoreboard, but within a range of WinEnd_{R} to WinStart_{R}+2¹¹ (within half of the sequence number space), the receiver moves the window of the scoreboard to the right (which may be understood as: the receiver updates WinEnd_{R} to make WinEnd_{R} equal to the SN) until the rightmost edge of the window of the scoreboard includes the new SN. When a BAR frame arrives, the window of the scoreboard is moved to the right, so that WinStart_{R} is equal to an SSN provided by the BAR frame, and a BA frame with recorded content of the scoreboard is returned.

For example, when receiving an MPDU with an SN, the receiver checks whether the MPDU has a corresponding scoreboard record of the BA session. The BA session is identified by a transmitter address (transmitter address, TA) and a TID. If there is no scoreboard record, the receiver creates a scoreboard for the BA session, and may reuse memory of another session.

It should be noted that in the multi-link communication scenario shown in embodiments of this application, each link between a transmitter and the receiver maintains respective scoreboard context control, and there is an MLD common scoreboard. Devices on each link (for example, each STAin an MLD, or each AP in the MLD) use respective scoreboard context control to feed back receiving statuses of MPDUs on the link. The common scoreboard may be used to record parameter information of a scoreboard on another link, for example, a start sequence number and/or an end sequence number of a scoreboard on each link, or record information (for example, WinStart_{B}) that integrates scoreboards of all links.

The following describes the method provided in embodiments of this application with reference to a specific scoreboard context control operation.

For example, an SN ranges from 0 to 4095. When the SN is 4095, if the SN is increased by 1, the value of 4096 becomes 0. Therefore, numerical values of SNs in examples shown below in this application are obtained by performing a modulo operation on 4096. For example, the receiver may perform an operation on the SN by using the modulo 4096, and each piece of SN space may be represented by a modulo 4096 counter.

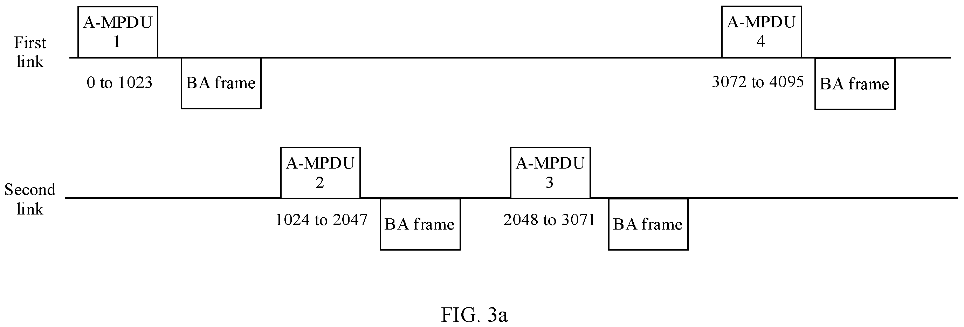

In the schematic diagrams shown in FIG. 3a to FIG. 3c, a transmitter may communicate with a receiver through two links, for example, a first link and a second link. For ease of description, in the following, a STA that is affiliated with the receiver and that is on the first link is referred to as a first STA, and a STA that is affiliated with the receiver and that is on the second link is referred to as a second STA. In other words, the first STA and the second STA are affiliated with a same MLD.

First type of scoreboard context control operation:
if the following conditions are true:
a recipient MLD has a separate scoreboard context control in each link;
all STAs affiliated with the recipient MLD are capable of using reordering buffer information to update the scoreboard contexts; and
a STA affiliated with the recipient MLD receives an MPDU with an SN that satisfies WinStart_{R}+2¹¹≤SN<WinStart_{R} and does not satisfy WinStart_{B}+2¹¹≤SN<WinStart_{B},
the STA may update the scoreboard context of the STA as if the MPDU with the SN that satisfies WinEnd_{R}<SN<WinStart_{R}+2¹¹ is received by the STA.

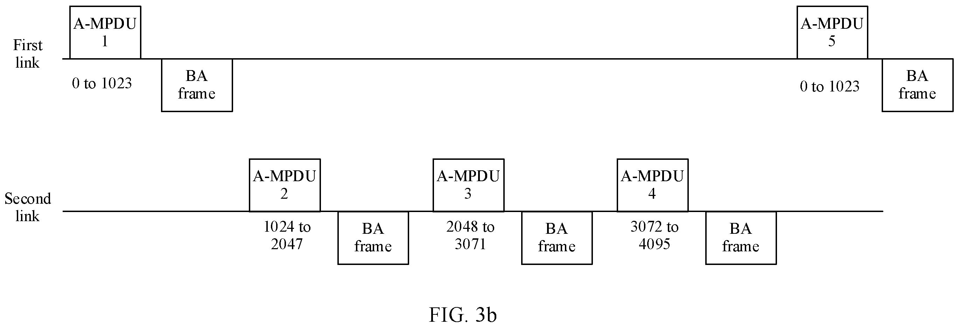

FIG. 3a is a schematic diagram of a scoreboard context control operation according to an embodiment of this application. For example, a same TID corresponds to four A-MPDUs, an aggregation length of each A-MPDU is 1024, in other words, each A-MPDU includes 1024 MPDUs, and an acknowledgment policy of each A-MPDU is an immediate block acknowledgment. A first STA receives a 1^{st} A-MPDU (for example, an A-MPDU 1 shown in FIG. 3a) with SNs from 0 to 1023. A second STAreceives a 2^{nd} A-MPDU (for example, an A-MPDU 2 shown in FIG. 3a) with SNs from 1024 to 2047; and a 3^{rd} A-MPDU (for example, an A-MPDU 3 shown in FIG. 3a) with SNs from 2048 to 3071. The first STA receives a 4^{th} A-MPDU (for example, an A-MPDU 4 shown in FIG. 3a) with SNs from 3072 to 4095. It may be understood that for description of relationships between A-MPDUs and SNs shown in FIG. 3b, refer to FIG. 3a. Details are not described one by one in the following.

After the first STA updates a scoreboard context of the first STA based on the SNs of the 1^{st} A-MPDU, in a scoreboard of the first STA (which may also be referred to as a scoreboard of the first link), WinStart_{R}=0 and WinEnd_{R}=1023. After the second STA updates a scoreboard context of the second STA based on the SNs of the 2^{nd} A-MPDU and the SNs of the 3^{rd} A-MPDU, in a scoreboard of the second STA (which may also be referred to as a scoreboard of the second link), WinStart_{R}=2048 and WinEnd_{R}=3071. In addition, in the scoreboard of the first STA and the scoreboard of the second STA, WinStart_{B}=3072.

Based on the first type of scoreboard context control operation, when the SNs of the 4^{th} A-MPDU received by the first STA meet 0+2048≤SN<0, and the SNs do not meet 1024 (obtained by performing a modulo operation on a sum of 3072 and 2048 based on 4096) ≤SN<3072, the first STA may update the scoreboard context of the first STA based on the SNs of the 4^{th} A-MPDU. Because the SNs of the 4^{th} A-MPDU are from 3072 to 4095, if the first STA successfully receives all MPDUs in the 4^{th} A-MPDU, the scoreboard of the first STA is updated to: WinStart_{R}=3072 and WinEnd_{R}=4095.

However, when A-MPDUs received by the first STA and the second STA are shown in FIG. 3b, and when the first STAreceives a 5^{th} A-MPDU (an A-MPDU 5 shown in FIG. 3b) with SNs from 0 to 1023, based on the first type of scoreboard context control operation, the first STA cannot correctly feed back receiving statuses of all MPDUs in the 5^{th} A-MPDU.

To resolve the foregoing problem, embodiments of this application further provide a second type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinEnd_{R}; and
another STA affiliated with the recipient MLD has received an MPDU with an SN that satisfies WinStart_{B}-WinSize_{R}≤SN<WinStart_{B},
the STA may refresh (or flush) and update a scoreboard context of the STA.

The recipient MLD shown above has separate scoreboard context control in each link, which may also be understood as: each STA affiliated with the recipient MLD maintains respective scoreboard context control.

It should be noted that, in this embodiment of this application, that a STA refreshes a scoreboard context of the STA means that the STA initializes the scoreboard context of the STA, zeros out the scoreboard context of the STA, clears content already recorded in the scoreboard context, clears a cache of the scoreboard context, or the like. Updating the scoreboard context of the STA means that the STA may perform update based on the existing content in the scoreboard context.

FIG. 3b is used as an example. The SNs of the 5^{th} A-MPDU received by the first STA meet 0≤SN<1023. An SN of an MPDU received by the scoreboard context of the second STA (that is, a scoreboard of another STA) meets 3072≤SN<4096. Therefore, the first STA may refresh the scoreboard of the first STA and update the scoreboard context of the first STA. In other words, the first STA may clear a record before receiving the 5^{th} A-MPDU, to update the initialized scoreboard context by using the SNs of the 5^{th} A-MPDU. Therefore, if the first STA successfully receives all the MPDUs in the 5^{th} A-MPDU, the scoreboard of the first STA is refreshed and updated to: WinStart_{R}=0 and WinEnd_{R}=1023.

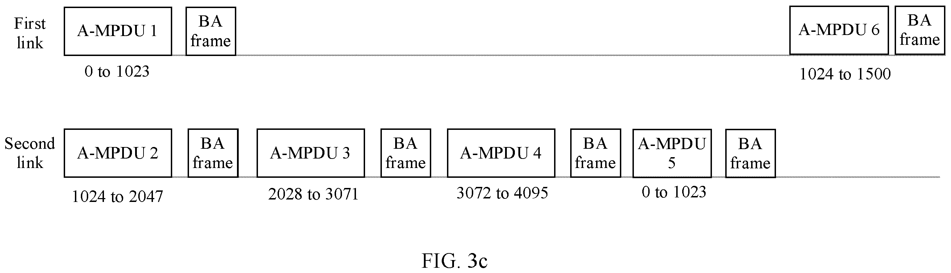

In still another scenario, when A-MPDUs received by the first STA and the second STA are shown in FIG. 3c, before the first STA does not receive a 6^{th} A-MPDU (an A-MPDU 6 shown in FIG. 3c), in the scoreboard context of the first STA, WinStart_{R}=0 and WinEnd_{R}=1023. When the receiver receives the 6^{th} A-MPDU, because SNs are from 1024 to 1500, the SNs of the 6^{th} A-MPDU neither belong to the foregoing first type of scoreboard context control operation, nor belong to the foregoing second type of scoreboard context control operation. Therefore, the first STA cannot learn how to update the scoreboard context of the first STA. It may also be understood as: when the receiver receives the 6^{th} A-MPDU, a case in which an SN of an MPDU received by the first STA falls within a range of WinEnd_{R}≤SN<WinStart_{R}+2¹¹ is not considered in the foregoing second type of scoreboard context control operation. If WinEnd_{R} of the scoreboard of the first STA is directly moved to a location of 1500, and WinStart_{R} is at 477 (that is, 1500-1023), status information of 477 to 1023 in a previous round is incorrectly fed back when a BA frame is fed back.

To resolve the foregoing problem, embodiments of this application provide a third type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2¹¹; and
another STA affiliated with the recipient MLD has received an MPDU with an SN that satisfies WinStart_{B}-WinSize_{R}≤SN<WinStart_{B},
the STA may refresh and update the scoreboard context of the STA. (If the following conditions are true: a recipient MLD has a separate scoreboard context control in each link; the STA affiliated with the MLD is capable of using reordering buffer information to update its scoreboard context; a STA affiliated with the MLD receives a frame with SN that is WinStartR≤SN<WinStartR+211; the other STA affiliated with the MLD receives a frame with SN that is WinStartB-WinSizeR≤SN<WinStartB; the STA shall flush the scoreboard context and update the scoreboard context).

Based on the foregoing third type of scoreboard context control operation, for example, FIG. 3c is used as an example, before the first STA does not receive the 6^{th} A-MPDU, in the scoreboard context of the first STA, WinStart_{R}=0 and WinEnd_{R}=1023. When the first STA receives the 6^{th} A-MPDU, because the SNs of the 6^{th} A-MPDU meet 0≤SN<0+2¹¹, SNs of an A-MPDU already received by another STA (the second STA shown in FIG. 3c) meet WinStart_{B}-WinSize_{R}≤SN<WinStart_{B} (WinStart_{B}=1024). Therefore, the first STA may refresh the scoreboard context of the first STA and update the scoreboard context. In the updated scoreboard context, WinStart_{R}=477, and WinEnd_{R}=1500.

In combination with the first type of scoreboard context control operation and the second type of scoreboard context control operation described above, the STA affiliated with the recipient MLD may refresh the scoreboard context every time an MPDU is obtained. This manner has a problem of improperly flushing a local scoreboard.

It is assumed that the STA receives an A-MPDU. The A-MPDU includes a first MPDU and a second MPDU, and a local scoreboard context may be flushed for one time based on an SN of the first MPDU. When the local scoreboard context is flushed based on the second MPDU, a scoreboard context, of a BA frame that is not fed back, related to the SN of the first MPDU is flushed. Because after the STA flushes the local scoreboard context based on the SN 1 of the first MPDU, the STA does not feed back the BA frame. In this case, if the local scoreboard context is flushed for another time based on the second MPDU, the STA cannot correctly feed back the BA frame.

To resolve the foregoing problem, embodiments of this application provide a fourth type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinEnd_{R};
another STA affiliated with the recipient MLD has received an MPDU with an SN that satisfies WinStart_{B}-WinSize_{R}≤SN<WinStart_{B}; and
no other MPDU with an SN in a currently received A-MPDU already fulfills all above conditions (no other frame with an SN in current A-MPDU that already fulfills all above conditions), it is the 1^{st} MPDU, received by the STA, with an SN in the A-MPDU that fulfills all above conditions (it is the first frame with an SN in current A-MPDU that fulfills all above conditions), or the scoreboard of the STA has not been refreshed based on an MPDU in the currently received A-MPDU (the scoreboard is not flushed based on a frame in current A-MPDU),
the STA may refresh and update the scoreboard context of the STA. (If the following conditions are true: a recipient MLD has a separate scoreboard context control in each link, the STA affiliated with the MLD is capable of using reordering buffer information to update its scoreboard context; a STA affiliated with the MLD receives a frame with SN that is WinStart_{R}≤SN<WinEnd_{R}; the other STA affiliated with the MLD receives a frame with SN that is WinStart_{B}-WinSize_{R}≤SN<WinStart_{B}; no other frame with an SN in current A-MPDU that already fulfills all above conditions; the STA shall flush the scoreboard context and update the scoreboard context).

In other words, in the fourth type of scoreboard context control operation, when the receiver obtains the A-MPDU, a plurality of MPDUs included in the A-MPDU are all sent to a STA, and SNs of the plurality of MPDUs all meet WinStart_{R}≤SN<WinEnd_{R}, the STA may refresh a scoreboard context of the STA based on a 1^{st} MPDU that is in the A-MPDU and that meets all the conditions other than the last condition. It may also be said that the STA cannot refresh the scoreboard context of the STA based on an SN of a non-1^{st} MPDU that is in the A-MPDU and that meets all the conditions other than the last condition.

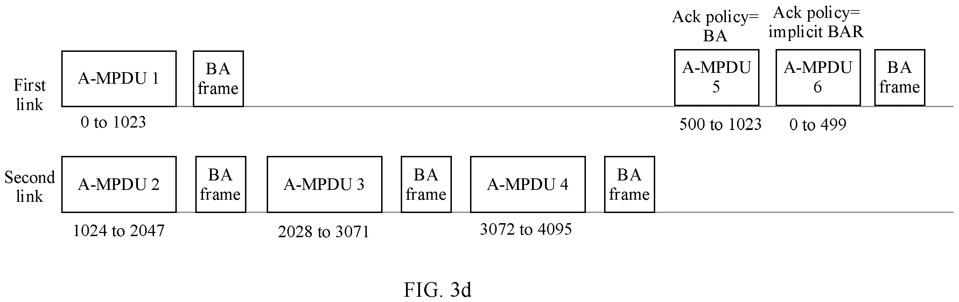

A schematic diagram shown in FIG. 3d is used as an example. After a first STAreceives two A-MPDUs with SNs from 500 to 1023 and with SNs from 0 to 499, because both the two A-MPDUs meet the foregoing second type of scoreboard context control operation, the first STA performs flushing separately for two times. For example, when the local scoreboard context is flushed after the A-MPDU with SNs from 0 to 499 is received, a BA record, of a BA frame that is not replied, and with SNs from 500 to 1023 is also flushed. It may be understood that a 1^{st} acknowledgment policy (ACK policy) shown in FIG. 3d indicates that the first STA does not need to feed back the BA frame temporarily, and a 2^{nd} acknowledgment policy (which may also be referred to as an implicit BAR) shown in FIG. 3d indicates that the first STA needs to feed back the BA frame.

To resolve the foregoing problem, embodiments of this application further provide a fifth type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinEnd_{R};
another STA affiliated with the recipient MLD has received an MPDU with an SN that satisfies WinStart_{B}-WinSize_{R}≤SN<WinStart_{B}, and
no any MPDU in another A-MPDU received before a currently received A-MPDU is not responded by a BA, no any MPDU in any A-MPDU received before a currently received A-MPDU is not responded by a BA (no any frame that is carried in any A-MPDU that received before current A-MPDU is not responded by a BA), or all MPDUs carried in any A-MPDU received before a currently received A-MPDU have been responded by a BA (all frames that are carried in the A-MPDUs that received before current A-MPDU has been responded by BAs),
the STA may refresh and update the scoreboard context of the STA. (If the following conditions are true: a recipient MLD has a separate scoreboard context control in each link, the STA affiliated with the MLD is capable of using reordering buffer information to update its scoreboard context. A STA affiliated with the MLD receives a frame with SN that is WinStart_{R}≤SN<WinEnd_{R}; the other STA affiliated with the MLD receives a frame with SN that is WinStart_{B}-WinSize_{R}≤SN<WinStart_{B}; no any frame that is carried in any A-MPDU that received before current A-MPDU is not responded by a BA; the STA shall flush the scoreboard context and update the scoreboard context).

In other words, in the fifth type of scoreboard context control operation, when a STA successively receives two A-MPDUs, and when an SN of an MPDU in a 1^{st} A-MPDU satisfies WinStart_{R}≤SN<WinEnd_{R}, the STA may refresh a scoreboard context of the STA. When the STA does not feed back a BA frame of the 1^{st} A-MPDU, even if an SN of an MPDU in a 2^{nd} A-MPDU satisfies the foregoing conditions, the STA does not refresh the scoreboard context of the STA, but may update the scoreboard context of the STA.

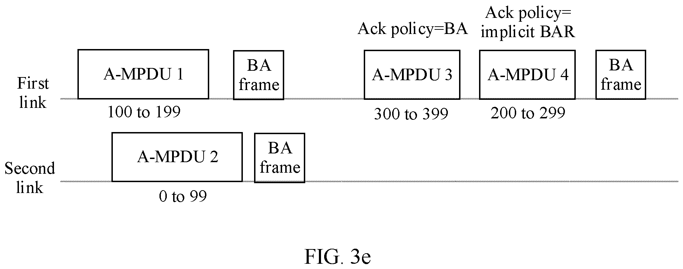

A schematic diagram shown in FIG. 3e is used as an example. After a first STAreceives an A-MPDU with SNs from 200 to 299, the A-MPDU meets the foregoing second type of scoreboard context control operation, and a scoreboard context in the first STA is refreshed. However, in the scenario shown in FIG. 3e, according to an SN relationship between a 1^{st} A-MPDU, a 3^{rd} A-MPDU, and a 4^{th} A-MPDU, the first STA does not need to perform flushing.

To resolve the foregoing problem, embodiments of this application provide a sixth type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinEnd_{R}; and
none of an MPDU with an SN that satisfies WinStart_{B}-WinSize_{R}≤SN<WinStart_{B} is (was) received by the STA (none of a frame with SN that is WinStart_{B}-WinSize_{R}≤SN<WinStart_{B} is (was) received by the STA), or all MPDUs with SNs that satisfy WinStart_{B}-WinSize_{R}≤SN<WinStart_{B} are (were) received by another STA affiliated with the recipient MLD (all frames with SN that are WinStart_{B}-WinSize_{R}≤SN<WinStart_{B} are (were) received by the other STA(s)), where it should be noted that the MPDU with an SN that satisfies WinStart_{B}-WinSize_{R}≤SN<WinStart_{B} herein refers to WinStart_{B} of a currently reordering buffer, and a range in which the SN satisfies WinStart_{B}-WinSize_{R}≤SN<WinStart_{B} is not considered, but an MPDU is an MPDU received in a previous round or earlier in the reordering buffer,
the STA may refresh and update the scoreboard context of the STA. (If the following conditions are true: a recipient MLD has a separate scoreboard context control in each link, the STA affiliated with the MLD is capable of using reordering buffer information to update its scoreboard context; a STA affiliated with the MLD receives a frame with SN that is WinStart_{R}≤SN<WinEnd_{R}; none of a frame with SN that is WinStart_{B}-WinSize_{R}≤SN<WinStart_{B} is (was) received by the STA; the STA shall flush the scoreboard context and update the scoreboard context).

In other words, in the sixth type of scoreboard context control operation, when a STA receives the A-MPDU with an SN that satisfies WinStart_{R}≤SN<WinEnd_{R}, and the MPDU with an SN that satisfies WinStart_{B}-WinSize_{R}≤SN<WinStart_{B} is not received by the STA, the STA may refresh the scoreboard context of the STA.

FIG. 3e is used as an example. Before the first STA does not receive a 2^{nd} A-MPDU and a 3^{rd} A-MPDU, in the scoreboard context of the first STA, WinStart_{R}=199-1023+4096=3272, WinEnd_{R}=199, and WinStart_{B}=200. When the first STAreceives the 3^{rd} A-MPDU, because an SN of the 3^{rd} A-MPDU is from 300 to 399, and the foregoing condition is not met, the scoreboard context of the first STA is not updated. It is similar for a 4^{th} A-MPDU. This is not listed one by one.

It may be understood that the third type of scoreboard context control operation to the sixth type of scoreboard context control operation described above may be implemented separately, or may be combined with each other. For example, the third type of scoreboard context control operation and the fourth type of scoreboard context control operation may be combined to obtain, for example, a seventh type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2¹¹;
another STA affiliated with the recipient MLD has received an MPDU with an SN that satisfies WinStart_{B}-WinSize_{R}≤SN<WinStart_{B}; and
no other MPDU with an SN in a currently received A-MPDU already fulfills all above conditions, it is the 1^{st} MPDU, received by the STA, with an SN in the A-MPDU that fulfills all above conditions, or the scoreboard context of the STA has not been refreshed based on an MPDU in a currently received A-MPDU,
the STA may refresh and update the scoreboard context of the STA.

In this way, the seventh type of scoreboard context control operation can resolve both the problem shown in FIG. 3c above, and the problem of refreshing the scoreboard context for each MPDU shown above.

For example, the third type of scoreboard context control operation and the fifth type of scoreboard context control operation may be combined to obtain, for example, an eighth type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2¹¹;
another STA affiliated with the recipient MLD has received an MPDU with an SN that satisfies WinStart_{B}-WinSize_{R}≤SN<WinStart_{B}, and
no any MPDU in another A-MPDU received before a currently received A-MPDU is not responded by a BA, no any MPDU in any A-MPDU received before a currently received A-MPDU is not responded by a BA, or all MPDUs carried in any A-MPDU received before a currently received A-MPDU have been responded by a BA,
the STA may refresh and update the scoreboard context of the STA.

In this way, the eighth type of scoreboard context control operation can resolve the problems shown in FIG. 3c and FIG. 3d above.

It may be understood that the fourth type of scoreboard context control operation and the fifth type of scoreboard context control operation shown in this embodiment of this application may also be combined. Details are not described one by one herein again.

For example, the third type of scoreboard context control operation, the fourth type of scoreboard context control operation, and the fifth type of scoreboard context control operation may be combined to obtain, for example, a ninth type of scoreboard context control operation:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2¹¹;
another STA affiliated with the recipient MLD receives an MPDU with an SN that satisfies WinStart_{B}-WinSize_{R}≤SN<WinStart_{B};
no other MPDU with an SN in a currently received A-MPDU already fulfills all above conditions, it is the 1^{st} MPDU, received by the STA, with an SN in the currently received A-MPDU that fulfills all above conditions, or the scoreboard context of the STA has not been refreshed based on an MPDU in the currently received A-MPDU; and
no any MPDU in another A-MPDU received before the currently received A-MPDU is not responded by a BA, no any MPDU in any A-MPDU received before the currently received A-MPDU is not responded by a BA, or all MPDUs carried in any A-MPDU received before the currently received A-MPDU have been responded by a BA,
the STA may refresh and update the scoreboard context of the STA.

In this way, the ninth type of scoreboard context control operation can effectively resolve the problems shown in FIG. 3c and FIG. 3d above.

For example, the third type of scoreboard context control operation, the fourth type of scoreboard context control operation, the fifth type of scoreboard context control operation, and the sixth type of scoreboard context control operation may be combined to obtain, for example, a tenth type of scoreboard context control operation:
if the following conditions are true:
a recipient MLD has a separate scoreboard context control in each link;
all STAs affiliated with the recipient MLD are capable of using reordering buffer information to update the scoreboard contexts; and
a STA affiliated with the recipient MLD receives an MPDU with an SN that satisfies WinStart_{R}≤SN<WinStart_{R}+2¹¹,
none of an MPDU with an SN that satisfies WinStart_{B}-WinSize_{R}≤SN<WinStart_{B} is received by the STA, or an MPDU, received by another STA affiliated with the recipient MLD, with an SN that satisfies WinStart_{B}-WinSize_{R}≤SN<WinStart_{B};
no any MPDU in another A-MPDU received before a currently received A-MPDU is not responded by a BA, no any MPDU in any A-MPDU received before a currently received A-MPDU is not responded by a BA, or all MPDUs carried in any A-MPDU received before a currently received A-MPDU have been responded by a BA, where
it may be understood that a sequence of performing the foregoing conditions by the STA is not limited; and
no other MPDU with an SN in a currently received A-MPDU already fulfills all above conditions, it is the 1^{st} MPDU, received by the STA, with an SN in the A-MPDU that fulfills all above conditions, or the scoreboard context of the STA has not been refreshed based on the MPDU in the currently received A-MPDU,
the STA may refresh and update the scoreboard context of the STA.

In this way, the tenth type of scoreboard context control operation can effectively resolve the problems shown in FIG. 3c to FIG. 3e above.

For example, the tenth type of scoreboard context control operation described above may be further understood as:
if the following conditions are true:
a recipient MLD has a separate scoreboard context control in each link;
the STA affiliated with the MLD is capable of using reordering buffer information to update its scoreboard context;
a STA affiliated with the MLD receives a frame with SN that is WinStart_{R}≤SN<WinStart_{R}+2¹¹;
none of a frame with SN that is WinStart_{B}-WinSize_{R}≤*SN*<*WinStart_{B}* is (was) received by the STA;
no any frame that is carried in another A-MPDU that received before current A-MPDU is not responded by a BA; and
no other frame with an SN in current A-MPDU that already fulfills all above conditions,
the STA shall flush the scoreboard context and update the scoreboard context.

It may be understood that FIG. 3a to FIG. 3e are all shown by using an example in which one A-MPDU includes a plurality of MPDUs, and each SN may correspond to one MPDU. It may be understood that, in this application, the SNs of the A-MPDUs shown above are all shown by using an example in which the SNs belong to a same TID.

With reference to the foregoing third to tenth types of scoreboard context control operations, an embodiment of this application provides a multi-link communication method. For descriptions of a transmitter and a receiver in the method, refer to the foregoing description. Details are not described one by one herein again. As shown in FIG. 4, the multi-link communication method includes the following steps.

401: The transmitter sends a first A-MPDU to the receiver, and the receiver receives the first A-MPDU.

Optionally, there may be one link between the transmitter and the receiver.

Optionally, there may be at least two links between the transmitter and the receiver.

Optionally, the first A-MPDU may include one MPDU. Optionally, the first A-MPDU may include at least two MPDUs.

It may be understood that the A-MPDU is carried in a PPDU. Generally, for a receiving station, one PPDU carries only one A-MPDU. Therefore, the A-MPDU in this embodiment of this application may be further understood as the PPDU. This is not limited in this embodiment of this application.

402: The receiver obtains a locally recorded scoreboard context, and when the first A-MPDU meets any one or more of the following conditions, refreshes the scoreboard context based on an SN of the first A-MPDU.

It may be understood that the locally recorded scoreboard context in this embodiment of this application may be an initialized scoreboard context, a scoreboard context updated by the receiver based on an A-MPDU that has been received by the receiver before the first A-MPDU is received, a scoreboard context refreshed by the receiver based on an A-MPDU that has been received by the receiver before the first A-MPDU is received, or the like. This is not listed one by one herein.

Conditions that the first A-MPDU meets include:
a first condition: a STA affiliated with the receiver receives an MPDU with an SN that satisfies WinStart_{R}≤SN<WinStart_{R}+2¹¹;
a second condition: none of MPDUs with SNs that satisfy WinStart_{B}-WinSize_{R}≤SN<WinStart_{B} is received by the STA, or all MPDUs with SNs that satisfy WinStart_{B}-WinSize_{R}≤SN<WinStart_{B} are received by another STA affiliated with the receiver;
a third condition: no any MPDU in another A-MPDU received before the currently received A-MPDU is not responded by a BA, no any MPDU in any A-MPDU received before the first A-MPDU is not responded by a BA, or all MPDUs carried in any A-MPDU received before the first A-MPDU respond by a BA; and
a fourth condition: no other MPDU with an SN in the first A-MPDU already meets all the foregoing conditions (the first condition to the third condition described above), an MPDU with an SN received by a STA affiliated with the receiver is a 1^{st} MPDU that is in the first A-MPDU and that meets the foregoing conditions, or a scoreboard context of a STA affiliated with the receiver has not been refreshed based on an MPDU in the first A-MPDU.

It may be understood that a sequence of performing the first condition to the third condition by the STA is not limited in this embodiment of this application.

Optionally, when the first A-MPDU meets any one of the first condition to the fourth condition described above, for another condition met by the first A-MPDU, refer to related descriptions of the third type of scoreboard context control operation to the sixth type of scoreboard context control operation described above.

Optionally, when the first A-MPDU meets any two of the first condition to the fourth condition described above, for another condition met by the first A-MPDU, refer to related descriptions of the sixth type of scoreboard context control operation to the ninth type of context control operation described above.

Optionally, when the first A-MPDU meets the first condition to the fourth condition described above, for another condition met by the first A-MPDU, refer to related descriptions of the tenth type of scoreboard context control operation described above.

It may be understood that, for a condition met by the first A-MPDU, refer to the foregoing descriptions of the third type of scoreboard context control operation to the tenth type of context control operation. Details are not described one by one herein again.

403: The receiver sends a BA frame to the transmitter, where the BA frame is used to acknowledge a receiving status of the MPDU in the first A-MPDU.

It may be understood that for descriptions of an ADDBA request frame, an ADDBA response frame, and a BAR frame that are not shown in this embodiment of this application, refer to FIG. 2 shown above. Details are not described one by one herein again.

According to the method provided in this embodiment of this application, the receiver can properly and effectively refresh a local scoreboard (local scoreboard) context.

In the multi-link communication method shown in FIG. 4, the receiver may refresh or update the local scoreboard context based on the third type of scoreboard context control operation to the tenth type of scoreboard context control operation. An embodiment of this application further provides a multi-link communication method. In the method, a transmitter may indicate, by using indication information, whether a receiver refreshes a local scoreboard context, thereby effectively reducing complexity of the receiver.

FIG. 5 is a schematic flowchart of another multi-link communication method according to an embodiment of this application. For descriptions of a transmitter and a receiver in the method, refer to the foregoing description. Details are not described one by one herein again. As shown in FIG. 5, the multi-link communication method includes the following steps.

501: The transmitter sends a second A-MPDU to the receiver, where the second A-MPDU includes indication information, and the indication information indicates the receiver whether to refresh a scoreboard context of the receiver. Correspondingly, the receiver receives the second A-MPDU.

It may be understood that, in the method shown in FIG. 4, a STA at the receiver is capable of using reordering buffer information to update the scoreboard context. In the method shown in FIG. 5, a STA at the receiver may be capable of updating the scoreboard context by using the reordering buffer information, or may not be capable of updating the scoreboard context by using the reordering buffer information.

For example, when the indication information is set to 0, it may indicate that the receiver does not need to refresh the local scoreboard context. For another example, when the indication information is set to 1, it indicates that the receiver needs to refresh the local scoreboard context, or may implicitly indicate that the receiver is capable of refreshing the local scoreboard context. Generally, the second A-MPDU is transmitted through a link, and a STA receiving the A-MPDU on the link is unique. Therefore, the STA corresponding to the link used to transmit the second A-MPDU may determine, based on the indication information, whether to refresh the local scoreboard context.

FIG. 6a is a schematic diagram of a structure of an MPDU subframe according to an embodiment of this application. As shown in FIG. 6a, indication information may be carried in a reserved (reserved) field in an MPDU delimiter (delimiter), or carried in a high throughput (high throughput, HT) control (HT control) field.

The HT control field may be carried in an MPDU (for example, quality of service (quality of service, QoS) data (data) frame, a quality of service null (QoS null) frame, and a management frame) to carry some control information. A length of the HT control field is 4 bytes. There are three types of HT control fields, which are distinguished by B0 and B 1 bits. As shown in Table 1, when B0=0, a corresponding HT control field is an HT control field of a high throughput (high throughput, HT) type. When B0=1 and B 1=0, a corresponding HT control field is an HT control field of a very high throughput (very high throughput, VHT) type. When B0=1 and B 1=1, a corresponding HT control field is an HT control field of a high efficiency (high efficiency, HE) type.

**Table 1**

| Variant | B0 | B1 | B2 to B29 | B30 | B31 |
|---|---|---|---|---|---|
| HT | 0 | Middle part of the HT control field | | AC constraint | RDG/More PPDU |
| VHT | 1 | 0 | Middle part of the VHT control field | AC constraint | RDG/More PPDU |
| HE | 1 | 1 | Aggregation control field A-Control | | |

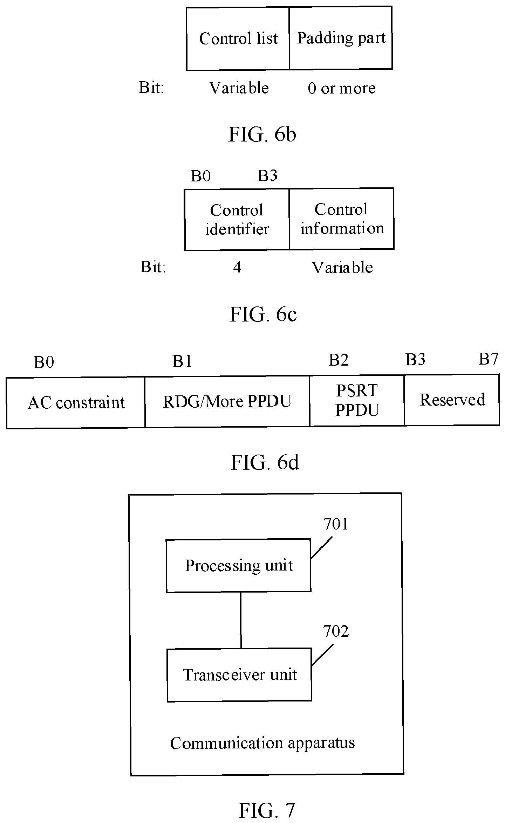

B2 to B31 in the HT control field of the HE type are referred to as the aggregation control (A-control) subfield (subfield). FIG. 6b is a schematic diagram of a format of an aggregation control field according to an embodiment of this application. The aggregation control field includes a control list (control list) and a padding (padding) part. A bit length of the control list is variable, and the control list may include one or more control subfields (control subfields). The padding part includes 0 or more bits. FIG. 6c is a schematic diagram of a format of a control subfield in an aggregation control field according to an embodiment of this application. One control subfield includes a 4-bit control identifier (control ID) and control information (control information). The control identifier is used to identify the control information. The control identifier and a length of the corresponding control information are shown in Table 2.

**Table 2**

| Control identifier value | Meaning | Length (bit) of the control information | Content of the control information |
|---|---|---|---|
| 0 | Triggered response scheduling (Triggered response scheduling, TRS) | 26 | Refer to 9.2.4.6a.1 (TRS control) |
| 1 | Operating mode (operating mode, OM) | 12 | Refer to 9.2.4.6a.2 (OM control) |
| 2 | High efficiency link adaptation (HE link adaptation, HLA) | 26 | Refer to 9.2.4.6a.3 (HLA control) |
| 3 | Buffer status report (buffer status report, BSR) | 26 | Refer to 9.2.4.6a.4 (BSR control) |
| 4 | Uplink power headroom (UL power headroom, UPH) | 8 | Refer to 9.2.4.6a.5 (UPH control) |
| 5 | Bandwidth query report (Bandwidth query report, BQR) | 10 | Refer to 9.2.4.6a.6 (BQR control) |
| 6 | Command and status (Command and status, CAS) | 8 | Refer to 9.2.4.6a.7 (CAS control) |
| 7 | Extremely high throughput operating mode (EHT operating mode, EHT OM) | 6 | Refer to 9.2.4.6a.8 (EHT OM control) |
| 8 | Single response scheduling (Single response scheduling, SRS) | 10 | Refer to 9.2.4.6a.9 (SRS control) |
| 10 | Access point assistance request (AP assistance request, AAR) | 20 | Refer to 9.2.4.6a.10 (AAR control) |
| 9, and 11 to 14 | Reserved | | |
| 15 | Ones need expansion surely (Ones need expansion surely, ONES) | 26 | Set to all 1s |

It may be understood that refer to a related standard or protocol for descriptions of other fields shown in FIG. 6a such as an end of frame (end of frame, EOF) field, a reversed (reversed) field, an MPDU length (length) field, a cyclic redundancy check (cyclic redundancy check, CRC) field, and a delimiter signature (delimiter signature) field that are included in an MPDU delimiter; and a frame control (frame control) field, a duration/identifier (duration/ID) field, an address 1 (address 1) field to an address 4 (address 4) field, a sequence control (sequence control) field, a QoS control (QoS control) field, an HT control (HT control) field, a padding (padding) field, and the like included in an MPDU. Details are not described one by one herein again.

Based on the foregoing description, this embodiment of this application provides two HE types of HT control fields that can carry the indication information.

A first method is implementing the indication information by using a reserved (reversed) bit in CAS type control information. A frame structure of the CAS type control information is shown in FIG. 6d. As shown in FIG. 6d, the CAS type control information may include an access category (access category, AC) constraint (AC constraint) field, a reverse direct grant (reverse direct grant, RDG) field, a parameterized spatial reuse transmission (parameterized spatial reuse transmission, PSRT) PPDU field, and a reserved (reserved) field. It may be understood that refer to a related standard or protocol for related description of another field in FIG. 6d. Details are not described one by one herein again.

A second method is establishing a new control type (as shown in FIG. 6c) by using a currently reserved control identifier (control ID), and indicate the new control type by using control information of the new control type. For example, a bit length of the indication information may be 1 bit.

502: The receiver refreshes the scoreboard context based on the indication information.

It may be understood that the receiver may alternatively not refresh the scoreboard context based on the indication information. For example, the receiver may update the scoreboard context.

503: The receiver sends a BA frame to the transmitter, and the transmitter receives the BA frame.

It may be understood that for descriptions of an ADDBA request frame, an ADDBA response frame, and a BAR frame that are not shown in this embodiment of this application, refer to FIG. 2 shown above. Details are not described one by one herein again.

According to the method provided in this embodiment of this application, the transmitter adds the indication information to the A-MPDU to indicate the receiver to refresh the scoreboard context. This can effectively reduce complexity of the receiver and improve efficiency of refreshing the scoreboard context by the receiver.

An embodiment of this application further provides a multi-link communication method. In this implementation, a STA at a receiver may be capable of updating a scoreboard context by using reordering buffer information, or may not be capable of updating the scoreboard context by using the reordering buffer information.

In this embodiment of this application, a transmitter includes a first field in a transmitted data frame (that is, an A-MPDU), and the first field indicates a round of transmission of a current SN. The first field may be referred to as a round of SN subfield (Round of SN subfield), and an initial value of the field is set to 0. When an SN of the data frame is returned to 0 again once the SN exceeds a maximum SN value (4095), the value of the round of SN subfield is increased by 1. For example, it is assumed that the round of SN subfield includes five bits, a value of the round of SN subfield may be from 0 to 31. For example, if the value of the round of SN subfield is set to 31, the value is returned to 0 if the value is increased by 1.

Therefore, after receiving a data frame, the receiver may refresh a local scoreboard context before updating the local scoreboard context if the following conditions are met:
if the local scoreboard context is updated based on the SN of the data frame, the updated local scoreboard context at least partially cover a range before the update; and
the value of the round of SN subfield is different from a value of the round of SN subfield carried in a data frame received last time.

For example, the round of SN subfield may be included in the newly created HT control type of the HE type shown in FIG. 5 (a new control type is newly created by using the unused IDs in the first column shown in Table 2, as shown in FIG. 6c). A bit length of the round of SN subfield is not limited in this embodiment of this application, for example, may be five bits. For example, the round of SN subfield may be carried by using a newly created A-control type, or carried in a reserved bit of a CAS control type. For example, refer to a bearer location of the indication information shown in FIG. 5.

It may be understood that if the length of the round of SN subfield is limited (for example, five bits), an original value may be restored after the value is increased for 32 times. In this case, the receiver may not be able to determine whether the value of the round of SN subfield changes. However, provided that the length of the round of SN subfield is long enough, a probability of occurrence of this situation is very low, which may be ignored as a low probability event.

An embodiment of this application further provides a type of scoreboard context control operation, as described in the following:

If a STA affiliated with a recipient MLD is not capable of using reordering buffer information to update a scoreboard context of the STA and the recipient MLD has separate scoreboard context control in each link, the STA needs to implement a partial-state operation (which means a partial state operation of a BA mechanism), and discard temporary records in the following defined time periods:
after sending a BA, where the BA and an acknowledged A-MPDU are in one transmission opportunity (transmission opportunity, TXOP), and before processing a scoreboard context of a next QoS data frame that is received from an initiator MLD on a same link and that is affiliated with a same TID; and
if the BA is not sent at the end of a current TXOP, after the next QoS data frame is received from the initiator MLD on the same link in a new TXOP, and before the scoreboard context is updated. (If a STA affiliated with a recipient MLD in a link is not capable of using reordering buffer information to update its scoreboard context and the recipient MLD has a separate scoreboard context control in each link, the STA shall implement the partial-state operation and should discard the temporary record in the following defined time periods:
   After sending a BA where the BA and the acknowledged A-MPDU(s) are in one TXOP and before processing the scoreboard context of the next received the QoS Data frame of the TID from the initiator MLD in the link if BA is transmitted; and
   immediate before processing the scoreboard context of the next received the QoS Data frame of the TID from the initiator MLD in the link in a new TXOP if BA is not transmitted at the end of the current TXOP (That is, after receiving the next QoS Data frame of the TID from the initiator MLD in the link in a new TXOP and before processing the scoreboard context, if BA is not transmitted at the end of the current TXOP)).

It may be understood that, in the foregoing embodiments, for an implementation that is not described in detail in one embodiment, refer to another embodiment.

As described above, the window size of the scoreboard may be 64, 128, 256, 512, 1024, or the like. Therefore, 2¹¹ involved in the third type of scoreboard context control operation to the tenth type of scoreboard context control operation described above are all illustrated by using WinSize_{R}=1024 as an example.

When the window size of the scoreboard is not 1024, 2¹¹ involved in at least one of the third type of scoreboard context control operation to the tenth type of scoreboard context control operation described above may change accordingly.

For example, the third type of scoreboard context control operation is used as an example. Actually, when a frame within a range of WinStart_{R}≤SN<WinStart_{R}+Q*WinSize_{R} is received, a scoreboard of the frame needs to be flushed. For example, Q is equal to 2, or Q may be equal to 3. For ease of description, the following uses Q=2 as an example to describe the method provided in this application.

When Q=2, because when WinStart_{R}+2*WinSize_{R}≤SN<WinStart_{R}+2¹¹, a first STA updates WinStart_{R} and WinEnd_{R}, and a scoreboard (new [WinStart_{R}, WinEnd_{R}]) range and a scoreboard range before the update (old [WinStart_{R}, WinEnd_{R}]) do not overlap, no record of receiving the old data frame is left on the scoreboard. In other words, the record of the old data is not fed back to a sending station by using a BA.

It may be understood that, if a critical point is considered, WinStart_{R}≤SN<WinStart_{R}+2¹¹ may also be understood as WinStart_{R}≤SN<WinStart_{R}+2¹¹-1. The following WinStart_{R}≤SN<WinStart_{R}+2*WinSize_{R} may also be understood as WinStart_{R}≤SN<WinStart_{R}+2*WinSize_{R}-1 or WinStart_{R}≤SN<WinEnd_{R}+WinSize_{R}. In other words, if rounding of a value, brevity of a formula, or the like is considered, a range that an SN meets in this application may be adjusted based on a specific range (for example, a range from -2 to +2). This is not listed one by one herein.

For ease of description, the following uses WinStart_{R}≤SN<WinStart_{R}+2*WinSize_{R}-1 as an example for description.

Q=2 is used as an example, and the third type of scoreboard context control operation may further be understood as:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2*WinSize_{R}-1; and
another STA affiliated with the recipient MLD has received an MPDU with an SN that satisfies WinStart_{B}-WinSize_{R}≤SN<WinStart_{B},
the STA may refresh and update a scoreboard context of the STA. (If the following conditions are true: a recipient MLD has a separate scoreboard context control in each link; the STA affiliated with the MLD is capable of using reordering buffer information to update its scoreboard context; a STA affiliated with the MLD receives a frame with SN that is WinStart_{R}≤SN<WinEnd_{R}+WinSize_{R}; the other STA affiliated with the MLD receives a frame with SN that is WinStart_{B}-WinSize_{R}≤SN<WinStart_{B}; the STA shall flush the scoreboard context and update the scoreboard context).

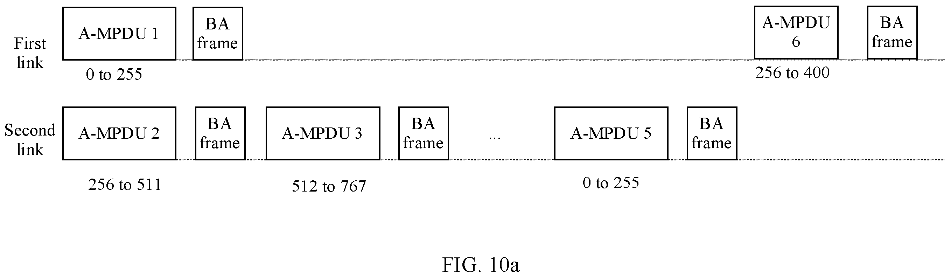

For the third type of context control operation, FIG. 10a is a procedure in which WinSize_{R}=256 is used as an example. Before the first STA does not receive a 6^{th} A-MPDU (for example, an A-MPDU 6 shown in FIG. 10a), in the scoreboard context of the first STA, WinStart_{R}=0 and WinEnd_{R}=255. When the receiver receives the 6^{th} A-MPDU, because SNs are from 256 to 400, the SNs of the 6^{th} A-MPDU neither belong to the foregoing first type of scoreboard context control operation, nor belong to the foregoing second type of scoreboard context control operation. Therefore, the first STA cannot learn how to update the scoreboard context of the first STA. It may also be understood as: when the receiver receives the 6^{th} A-MPDU, a case in which an SN of an MPDU received by the first STA falls within a range of WinEnd_{R}≤SN<WinStart_{R}+2*WinSize_{R}-1 is not considered in the foregoing second type of scoreboard context control operation. If WinEnd_{R} of the scoreboard of the first STA is directly moved to a location of 400, and WinStart_{R} is at 145 (that is, 400-255), status information of 145 to 255 in a previous round is incorrectly fed back when a BA frame is fed back.

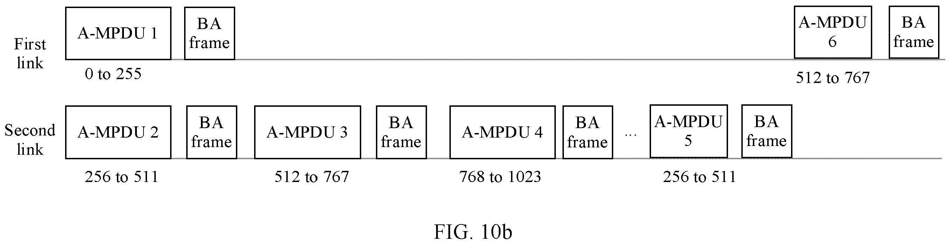

However, in FIG. 10b, before the first STA does not receive a 6^{th} A-MPDU (for example, the A-MPDU 6 shown in FIG. 10b), in the scoreboard context of the first STA, WinStart_{R}=0 and WinEnd_{R}=255. When the receiver receives the 6^{th} A-MPDU, because SNs are from 512 to 767, the SNs of the 6^{th} A-MPDU neither belong to the foregoing first type of scoreboard context control operation, nor belong to the foregoing second type of scoreboard context control operation. Therefore, the first STA cannot learn how to update the scoreboard context of the first STA. It may also be understood as: when receiving the 6^{th} A-MPDU, the receiver directly moves WinEnd_{R} of the scoreboard of the first STA to a location of 767, and WinStart_{R} is at 512. When the BA frame is fed back, status information of any frame within a range of 0 to 255 in the previous round is not incorrectly fed back. Therefore, the scoreboard does not need to be flushed for the 6^{th} A-MPDU. It may be understood that, in the example shown in FIG. 10b, ellipses omit other A-MPDUs that are not shown.

Q=2 is used as an example, and the seventh type of scoreboard context control operation may further be understood as:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2*WinSize_{R}-1;
another STA affiliated with the recipient MLD has received an MPDU with an SN that satisfies WinStart_{B}-WinSize_{R}≤SN<WinStart_{B}; and
no other MPDU with an SN in a currently received A-MPDU already fulfills all above conditions, it is the 1^{st} MPDU, received by the STA, with an SN in the A-MPDU that fulfills all above conditions, or the scoreboard context of the STA has not been refreshed based on an MPDU in the currently received A-MPDU,
the STA may refresh and update the scoreboard context of the STA.

Q=2 is used as an example, and the eighth type of scoreboard context control operation may further be understood as:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2*WinSize_{R}-1;
another STA affiliated with the recipient MLD has received an MPDU with an SN that satisfies WinStart_{B}-WinSize_{R}≤SN<WinStart_{B}; and
no any MPDU in another A-MPDU received before a currently received A-MPDU is not responded by a BA, no any MPDU in any A-MPDU received before a currently received A-MPDU is not responded by a BA, or all MPDUs carried in any A-MPDU received before a currently received A-MPDU have been responded by a BA,
the STA may refresh and update the scoreboard context of the STA.

Q=2 is used as an example, and the ninth type of scoreboard context control operation may further be understood as:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2*WinSize_{R}-1;
another STA affiliated with the recipient MLD has received an MPDU with an SN that satisfies WinStart_{B}-WinSize_{R}≤SN<WinStart_{B};
no other MPDU with an SN in a currently received A-MPDU already fulfills all above conditions, it is the 1^{st} MPDU, received by the STA, with an SN in the currently received A-MPDU that fulfills all above conditions, or the scoreboard context of the STA has not been refreshed based on an MPDU in the currently received A-MPDU; and
no any MPDU in another A-MPDU received before the currently received A-MPDU is not responded by a BA, no any MPDU in any A-MPDU received before the currently received A-MPDU is not responded by a BA, or all MPDUs carried in any A-MPDU received before the currently received A-MPDU have been responded by a BA,
the STA may refresh and update the scoreboard context of the STA.

Q=2 is used as an example, and the tenth type of scoreboard context control operation may further be understood as:
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2*WinSize_{R}-1;
none of an MPDU with an SN in MPDUs received by the STA that satisfies WinStart_{B}-WinSize_{R}≤SN<WinStart_{B}, or an MPDU, received by another STA affiliated with the recipient MLD, with an SN that satisfies WinStart_{B}-WinSize_{R}≤SN<WinStart_{B};
no any MPDU in another A-MPDU received before a currently received A-MPDU is not responded by a BA, no any MPDU in any A-MPDU received before a currently received A-MPDU is not responded by a BA, or all MPDUs carried in any A-MPDU received before a currently received A-MPDU have been responded by a BA, where
it may be understood that a sequence of performing the foregoing conditions by the STA is not limited; and
no other MPDU with an SN in a currently received A-MPDU already fulfills all above conditions, it is the 1^{st} MPDU, received by the STA, with an SN in the A-MPDU that fulfills all above conditions, or the scoreboard context of the STA has not been refreshed based on the MPDU in the currently received A-MPDU,
the STA may refresh and update the scoreboard context of the STA.

It may be understood that the foregoing description of the scoreboard context control operation is merely an example, and a relationship between 2¹¹ and a window of the scoreboard in the foregoing description of this application is not described one by one in detail herein again. For example, if the condition that the SN meets is combined with the window size of the scoreboard, all 2¹¹ shown above may be replaced with 2*WinSize_{R}.

In combination with the third type of scoreboard context control operation and the sixth type of scoreboard context control operation described above, this application further provides an eleventh type of scoreboard context control operation.
if the following conditions are true:
a recipient MLD has a separate scoreboard context control in each link;
all STAs affiliated with the recipient MLD are capable of using reordering buffer information to update the scoreboard contexts;
a STA affiliated with the recipient MLD receives an MPDU with an SN that satisfies WinStart_{R}≤SN<WinStart_{R}+2*WinSize_{R}-1; and
no any MPDU with an SN in MPDUs received by the STA satisfies WinStart_{B}-WinSize_{R}≤SN<WinStart_{B}, or an MPDU with an SN received by another STA affiliated with the recipient MLD satisfies WinStart_{B}-WinSize_{R}≤SN<WinStart_{B},
the STA may refresh and update the scoreboard context of the STA.

The following describes a communication apparatus provided in an embodiment of this application.

In this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in this application, the module division is used as an example, and is merely a logical function division. In actual implementation, another division manner may be used. The following describes in detail communication apparatuses in embodiments of this application with reference to FIG. 7 to FIG. 9.

FIG. 7 is a schematic diagram of a structure of a communication apparatus according to an embodiment of this application. As shown in FIG. 7, the communication apparatus includes a processing unit 701 and a transceiver unit 702.

In some embodiments of this application, the communication apparatus may be the transmitter shown above. In other words, the communication apparatus shown in FIG. 7 may be configured to perform steps, functions, and the like performed by the transmitter in the foregoing method embodiments.

For example, the transceiver unit 702 is configured to: send an ADDBA request frame, and receive an ADDBA response frame.

For another example, the transceiver unit 702 is further configured to send a first A-MPDU.

For another example, the transceiver unit 702 is further configured to: send a BAR frame, and receive a BA frame.

For another example, the transceiver unit 702 is further configured to send a second A-MPDU.

It may be understood that specific descriptions of the transceiver unit and the processing unit in this embodiment of this application are merely examples. For specific functions or steps performed by the transceiver unit and the processing unit, refer to the foregoing method embodiments (for example, FIG. 4 and FIG. 5 are included). Details are not described herein again.

FIG. 7 is reused. In some other embodiments of this application, the communication apparatus may be the receiver shown above. In other words, the communication apparatus shown in FIG. 7 may be configured to perform steps, functions, and the like performed by the receiver in the foregoing method embodiments.

For example, the transceiver unit 702 is configured to: receive an ADDBA request frame, and send an ADDBA response frame.

For another example, the transceiver unit 702 is further configured to receive a first A-MPDU.

For another example, the processing unit 701 is configured to: obtain a locally recorded scoreboard context, and when the first A-MPDU meets at least one of the third type of scoreboard context control operation to the tenth type of scoreboard context control operation shown in embodiments of this application, refresh the scoreboard context based on an SN of the first A-MPDU.

For another example, the transceiver unit 702 is further configured to: receive a BAR frame, and send a BA frame.

For another example, the transceiver unit 702 is further configured to receive a second A-MPDU. The processing unit 701 is further configured to refresh the scoreboard context based on indication information in the second A-MPDU.

It may be understood that refer to the method embodiments shown above for specific descriptions of the third type of scoreboard context control operation to the tenth type of scoreboard context control operation. Details are not described one by one herein again.

It may be understood that specific descriptions of the transceiver unit and the processing unit in this embodiment of this application are merely examples. For specific functions or steps performed by the transceiver unit and the processing unit, refer to the foregoing method embodiments (for example, FIG. 4 and FIG. 5 are included). Details are not described herein again.

The foregoing describes the transmitter and the receiver in embodiments of this application. The following describes possible product forms of the transmitter and the receiver. It should be understood that any form of product that has a function of the transmitter in FIG. 7 or any form of product that has a function of the receiver in FIG. 7 falls within the protection scope of embodiments of this application. It should be further understood that the following description is merely an example, and product forms of the transmitter and the receiver in embodiments of this application are not limited thereto.

In the communication apparatus shown in FIG. 7, the processing unit 701 may be one or more processors. The transceiver unit 702 may be a transceiver, or the transceiver unit 702 may be a sending unit and a receiving unit. The sending unit may be a transmitter, and the receiving unit may be a receiver. The sending unit and the receiving unit are integrated in one component, for example, a transceiver. In this embodiment of this application, the processor and the transceiver may be coupled, and a connection manner between the processor and the transceiver is not limited in this embodiment of this application.

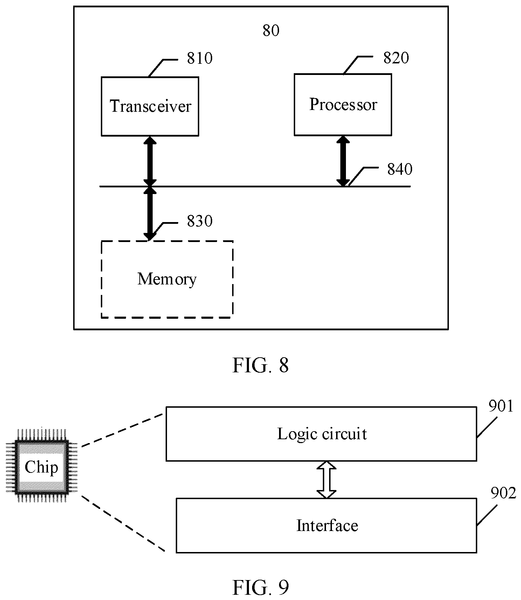

As shown in FIG. 8, a communication apparatus 80 includes one or more processors 820 and a transceiver 810.

For example, when the communication apparatus is configured to perform the steps, methods, or functions performed by the transmitter, for example, the transceiver 810 is configured to: send an ADDBA request frame, and receive an ADDBA response frame. For another example, the transceiver 810 is further configured to send a first A-MPDU. For another example, the transceiver 810 is further configured to: send a BAR frame, and receive a BA frame. For another example, the transceiver 810 is further configured to send a second A-MPDU.

For example, when the communication apparatus is configured to perform the steps, methods, or functions performed by the receiver, for example, the transceiver 810 is configured to: receive an ADDBA request frame, and send an ADDBA response frame. For another example, the transceiver 810 is further configured to receive a first A-MPDU. For another example, the processor 820 is configured to: obtain a locally recorded scoreboard context, and when the first A-MPDU meets at least one of the third type of scoreboard context control operation to the tenth type of scoreboard context control operation shown in embodiments of this application, refresh the scoreboard context based on an SN of the first A-MPDU. For another example, the transceiver 810 is further configured to: receive a BAR frame, and send a BA frame. For another example, the transceiver 810 is further configured to receive a second A-MPDU. The processor 820 is further configured to refresh the scoreboard context based on indication information in the second A-MPDU.

It may be understood that for specific descriptions of the processor and the transceiver, refer to descriptions of the processing unit and the transceiver unit shown in FIG. 7. Details are not described herein again.

In each implementation of the communication apparatus shown in FIG. 8, the transceiver may include a receiver and a transmitter. The receiver is configured to perform a function (or operation) of receiving, and the transmitter is configured to perform a function (or operation) of transmitting. The transceiver is configured to communicate with another device/apparatus by using a transmission medium.

Optionally, the communication apparatus 80 may further include one or more memories 830, configured to store program instructions and/or data. The memory 830 is coupled to the processor 820. The coupling in embodiments of this application may be an indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. Optionally, at least one of the one or more memories may be included in the processor.

A specific connection medium between the transceiver 810, the processor 820, and the memory 830 is not limited in this embodiment of this application. In this embodiment of this application, the memory 830, the processor 820, and the transceiver 810 are connected to each other through a bus 840 in FIG. 8. The bus is represented by using a thick line in FIG. 8. A connection manner between other components is merely an example for description, and is not limited thereto. The bus may be classified into an address bus, a data bus, a control bus, and the like. For ease of representation, only one bold line is used for representation in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

In this embodiment of this application, the memory may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a read-only memory (read-only memory, ROM), or a compact disc read-only memory (compact disc read-only memory, CD-ROM). The memory is any other medium that can carry or store program code in a form of instructions or a data structure and that can be read and/or written by a computer (for example, the communication apparatus shown in this application), but is not limited thereto. The memory in this embodiment of this application may alternatively be a circuit or any other apparatus that can implement a storage function, and is configured to store the program instructions and/or the data.

The processor 820 is mainly configured to: process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to: perform conversion between a baseband signal and a radio frequency signal, and process the radio frequency signal. The antenna is mainly configured to send and receive a radio frequency signal in a form of an electromagnetic wave. An input/output apparatus, for example, a touchscreen, a display, a keyboard, or the like is mainly configured to: receive data input by a user, and output data to the user.

After the communication apparatus is powered on, the processor 820 may read the software program in the memory 830, interpret and execute instructions of the software program, and process the data of the software program. When data needs to be wirelessly sent, after performing baseband processing on the to-be-sent data, the processor 820 outputs a baseband signal to a radio frequency circuit. After performing radio frequency processing on the baseband signal, the radio frequency circuit sends a radio frequency signal in the form of the electromagnetic wave through the antenna. When data is sent to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those in FIG. 8. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 7, the processing unit 701 may be one or more logic circuits, and the transceiver unit 702 may be an input/output interface, or referred to as a communication interface, an interface circuit, an interface, or the like. Alternatively, the transceiver unit 702 may be a sending unit and a receiving unit. The sending unit may be an output interface, and the receiving unit may be an input interface. The sending unit and the receiving unit are integrated into one unit, for example, an input/output interface. As shown in FIG. 9, the communication apparatus shown in FIG. 9 includes a logic circuit 901 and an interface 902. To be specific, the processing unit 701 may be implemented by using the logic circuit 901, and the transceiver unit 702 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 9 is an example in which the foregoing communication apparatus is used as a chip. The chip includes the logic circuit 901 and the interface 902.

In this embodiment of this application, the logic circuit and the interface may be further coupled to each other. A specific connection manner of the logical circuit and the interface is not limited in this embodiment of this application.

For example, when the communication apparatus is configured to perform the methods, functions, or steps performed by the transmitter, for example, the interface 902 is configured to: send an ADDBA request frame, and receive an ADDBA response frame. For another example, the interface 902 is further configured to send a first A-MPDU. For another example, the interface 902 is further configured to: send a BAR frame, and receive a BA frame. For another example, the interface 902 is further configured to send a second A-MPDU.

For example, when the communication apparatus is configured to perform the methods, functions, or steps performed by the receiver, for example, the interface 902 is configured to: receive an ADDBA request frame, and send an ADDBA response frame. For another example, the interface 902 is further configured to receive a first A-MPDU. For another example, the logic circuit 901 is configured to: obtain a locally recorded scoreboard context, and when the first A-MPDU meets at least one of the third type of scoreboard context control operation to the tenth type of scoreboard context control operation shown in embodiments of this application, refresh the scoreboard context based on an SN of the first A-MPDU. For another example, the interface 902 is further configured to: receive a BAR frame, and send a BA frame. For another example, the interface 902 is further configured to receive a second A-MPDU. The logic circuit 901 is further configured to refresh the scoreboard context based on indication information in the second A-MPDU.

It may be understood that the communication apparatus shown in embodiments of this application may implement the methods provided in embodiments of this application in a form of hardware, or may implement the methods provided in embodiments of this application in a form of software. This is not limited in embodiments of this application.

For specific implementations of the embodiment shown in FIG. 9, refer to the foregoing embodiments. Details are not described herein again.

An embodiment of this application further provides a wireless communication system. The wireless communication system includes a transmitter and a receiver. The transmitter and the receiver may be configured to perform the method in any one of the foregoing embodiments (as shown in FIG. 4, FIG. 5, and the like).

In addition, this application further provides a computer program. The computer program is used to implement an operation and/or processing performed by the transmitter in the method provided in this application.

This application further provides a computer program. The computer program is used to implement an operation and/or processing performed by the receiver in the method provided in this application.

This application further provides a computer-readable storage medium. The computer-readable storage medium stores computer code. When the computer code is run on a computer, the computer is enabled to perform an operation and/or processing performed by the transmitter in the method provided in this application.

This application further provides a computer-readable storage medium. The computer-readable storage medium stores computer code. When the computer code is run on a computer, the computer is enabled to perform an operation and/or processing performed by the receiver in the method provided in this application.

This application further provides a computer program product. The computer program product includes computer code or a computer program. When the computer code or the computer program runs on a computer, an operation and/or processing performed by the transmitter in the method provided in this application is enabled to be performed.

This application further provides a computer program product. The computer program product includes computer code or a computer program. When the computer code or the computer program runs on a computer, an operation and/or processing performed by the receiver in the method provided in this application is enabled to be performed.

In the several embodiments provided in this application, it should be understood that the disclosed systems, apparatuses, and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement technical effects of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software functional unit and is sold or used as an independent product, the integrated unit may be stored in a computer-readable storage medium. Based on such an understanding, the technical solutions of embodiments of this application essentially, or the part contributing to the conventional technology, all or some of the technical solutions may be implemented in a form of a software product. The computer software product is stored in a readable-storage medium, and includes several instructions for instructing a computer device (which may be a personal computer, a server, or a network device) to perform all or some of the steps of the methods described in embodiments of this application. The foregoing readable-storage medium includes any medium that can store program code, such as a USB flash drive, a removable hard disk, a read-only memory (read-only memory, ROM), a random access memory (random access memory, RAM), a magnetic disk, or an optical disc.

The foregoing description is merely a specific implementation of this application, but is not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-link communication method, wherein the method comprises:
receiving, by a receiver, a first aggregate media access control protocol data unit A-MPDU; and
obtaining, by the receiver, a locally recorded scoreboard context, and when the first A-MPDU meets any one or more of the following conditions, refreshing the scoreboard context based on a sequence number SN of the first A-MPDU, wherein
a first condition comprises: a STA affiliated with the receiver receives an MPDU with an SN that satisfies WinStart_{R}≤SN<WinStart_{R}+2¹¹;
a second condition comprises: none of MPDUs with SNs that satisfy WinStart_{B}-WinSize_{R}≤SN<WinStart_{B} is received by the STA, or all MPDUs with SNs that satisfy WinStart_{B}-WinSize_{R}≤SN<WinStart_{B} are received by another STA affiliated with the receiver; and
a third condition comprises: no any MPDU in another A-MPDU received before the first A-MPDU is not responded by a BA, any MPDU in any A-MPDU received before the first A-MPDU responds by a BA, or all MPDUs carried in any A-MPDU received before the first A-MPDU respond by a BA.

2. The method according to claim 1, wherein the first A-MPDU further meets the following fourth condition:
the fourth condition comprises: no other MPDU with an SN in the first A-MPDU already meets the first condition, the second condition, and the third condition, an MPDU with an SN received by a STA affiliated with the receiver is a 1^{st} MPDU that is in the first A-MPDU and that meets the first condition, the second condition, and the third condition, or a scoreboard context of a STA affiliated with the receiver has not been refreshed based on an MPDU in the first A-MPDU.

3. The method according to claim 1 or 2, wherein the receiver has separate scoreboard context control in each link, and the link is a link between the receiver and a transmitter.

4. The method according to any one of claims 1 to 3, wherein the STA affiliated with the receiver is capable of using reordering buffer information to update the scoreboard context.

5. The method according to any one of claims 1 to 4, wherein SNs in the first A-MPDU belong to a same traffic identifier TID.

6. A communication apparatus, comprising:
a transceiver unit, configured to receive a first aggregate media access control protocol data unit A-MPDU; and
a processing unit, configured to: obtain a locally recorded scoreboard context, and when the first A-MPDU meets any one or more of the following conditions, refresh the scoreboard context based on a sequence number SN of the first A-MPDU, wherein
a first condition comprises: a STA affiliated with the communication apparatus receives an MPDU with an SN that satisfies WinStart_{R}≤SN<WinStart_{R}+2¹¹;
a second condition comprises: none of MPDUs with SNs that satisfy WinStart_{B}-WinSize_{R}≤SN<WinStart_{B} is received by the STA, or all MPDUs with SNs that satisfy WinStart_{B}-WinSize_{R}≤SN<WinStart_{B} are received by another STA affiliated with the communication apparatus; and
a third condition comprises: no any MPDU in another A-MPDU received before the first A-MPDU is not responded by a BA, no any MPDU in any A-MPDU received before the first A-MPDU is not responded by a BA, or all MPDUs carried in any A-MPDU received before the first A-MPDU respond by a BA.

7. The apparatus according to claim 6, wherein the first A-MPDU further meets the following fourth condition:
the fourth condition comprises: no other MPDU with an SN in the first A-MPDU already meets the first condition, the second condition, and the third condition; an MPDU with an SN received by a STA affiliated with the communication apparatus is a 1^{st} MPDU that is in the first A-MPDU and that meets the first condition, the second condition, and the third condition; or a scoreboard context of a STA affiliated with the communication apparatus has not been refreshed based on an MPDU in the first A-MPDU.

8. The apparatus according to claim 6 or 7, wherein the communication apparatus has separate scoreboard context control in each link, and the link is a link between the communication apparatus and a transmitter.

9. The apparatus according to any one of claims 6 to 8, wherein the STA affiliated with the communication apparatus is capable of using reordering buffer information to update the scoreboard context.

10. The apparatus according to any one of claims 6 to 9, wherein SNs in the first A-MPDU belong to a same traffic identifier TID.

11. A communication apparatus, comprising a processor and a memory, wherein
the memory is configured to store instructions; and
the processor is configured to execute the instructions, to enable the method according to any one of claims to 1 to 5 to be performed.

12. A communication apparatus, comprising a logic circuit and an interface, wherein the logic circuit is coupled to the interface; and
the interface is configured to input and/or output code instructions, and the logic circuit is configured to execute the code instructions, to enable the method according to any one of claims 1 to 5 to be performed.

13. A computer-readable storage medium, wherein the computer-readable storage medium is configured to store a computer program, and when the computer program is executed, the method according to any one of claims 1 to 5 is performed.

14. A computer program, wherein when the computer program is executed, the method according to any one of claims 1 to 5 is performed.
